# EUROPEAN PATENT APPLICATION

(11) **EP 4 819 511 A1**
(43) Date of publication of application: **07.10.2026**
(21) Application number: 25167503.9
(22) Date of filing: 31.03.2025
(51) Int. Cl.: H04B 10/2507, H04B 10/564, H04B 10/572

(54) **MITIGATING HOLLOW CORE FIBER GAS LINE ABSORPTION**

(71) Applicant: Microsoft Technology Licensing, LLC, Redmond, WA 98052 (US)
(72) Inventor: KAMALIAN-KOPAE, Morteza, Redmond, 98052-6399 (US); ALI, Abdallah Alsayed Ismail, Redmond, 98052-6399 (US); SALJOGHEI, Arsalan, Redmond, 98052-6399 (US)
(74) Representative: CMS Cameron McKenna Nabarro Olswang LLP

(57) **Abstract**

An apparatus and method for mitigating gas line absorption of a signal transmitted via a hollow core fiber by a transmitter are described. The method comprises computing an adjustment to be made to a property of the signal, the adjustment being an adjustment to change one or more of a frequency, an amplitude, and a modulation format of the signal to reduce an impact of gas line absorption on the signal. The method further comprises configuring one or more of: the transmitter to cause the adjustment to be applied to the signal during transmission of the signal, via the hollow core fiber, by the transmitter; and a receiver configured to receive the signal transmitted via the hollow core fiber, to cause the adjustment to be applied to the signal after the receiver receives the signal.

## Description

### BACKGROUND

Hollow core fibers are a type of optical fiber that guides light through a central hollow core surrounded by cladding. Such fibers are used in optical communication systems to transmit signals between a transmitter and a receiver.

For example, by modulating an electromagnetic carrier wave based on data to be transmitted and transmitting the modulated wave as a signal via a length of hollow core fiber, the modulated wave can be received and demodulated to recover the transmitted data.

The integrity and quality of the signal that is received is an important factor in enabling the transmitted data to be accurately reconstructed.

The embodiments described below are not limited to implementations which solve any or all of the disadvantages of known optical communication systems.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

An apparatus and method for mitigating gas line absorption of a signal transmitted via a hollow core fiber by a transmitter are described. The method comprises computing an adjustment to be made to a property of the signal, the adjustment being an adjustment to change one or more of a frequency, an amplitude, and a modulation format of the signal to reduce an impact of gas line absorption on the signal. The method further comprises configuring one or more of: the transmitter to cause the adjustment to be applied to the signal during transmission of the signal, via the hollow core fiber, by the transmitter; and a receiver configured to receive the signal transmitted via the hollow core fiber, to cause the adjustment to be applied to the signal after the receiver receives the signal.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1A is a schematic diagram of a transverse cross-sectional view of a hollow core fiber;
FIG. 1B is a schematic diagram of an optical communication system comprising a hollow core fiber;
FIG. 2 is a chart illustrating the impact of gas line absorption on a signal transmitted in a system such as the system illustrated in FIG. 1B;
FIGS. 3A and 3B are charts further illustrating the impact of gas line absorption on a transmitted signal, showing intensity across a signal spectrum;
FIG. 4A is a schematic diagram showing optical communication channels of a signal, each having a same power allocation, across a signal spectrum overlapping with gas line absorption frequencies;
FIG. 4B is a schematic diagram showing optical communication channels of a signal as illustrated in FIG. 4A, but where the frequency and number of channels is adjusted;
FIG. 4C is a schematic diagram showing optical communication channels of a signal as illustrated in FIG. 4A, but where the power allocation across the channels is adjusted;
FIG. 4D is a schematic diagram showing optical communication channels of a signal with varying power allocations, as illustrated in FIG. 4A, but where the modulation format of some channels is adjusted to be different to the modulation format of other channels;
FIG. 5 is a chart illustrating a narrow-band amplification of a signal over a narrow-band region coinciding with a gas line absorption frequency;
FIG. 6A is a chart illustrating an intensity across a signal spectrum affected by gas line absorption, the spectrum comprising two tones;
FIG. 6B is a chart illustrating an intensity across a signal spectrum as shown in FIG. 6A, but where the spectrum comprises two additional duplicate tones;
FIG. 6C is a chart illustrating an intensity across a signal spectrum as shown in FIG. 6A, but where the tones of the spectrum have their amplitudes adjusted;
FIG. 7A is a chart illustrating an impact of intermodal interference on a channel response over a plurality of channels;
FIG. 7B is a chart illustrating a way of reducing intermodal interference effects by implementing a plurality of lower-bandwidth channels compared to those shown in FIG. 7A;
FIG. 8A is a flow diagram of a method for mitigating gas line absorption;
FIG. 8B is a flow diagram of an example method for mitigating gas line absorption;
FIG. 8C is a flow diagram of a method for mitigating intermodal interference and/or polarization mode dispersion;
FIG. 8D is a flow diagram of an example method for mitigating intermodal interference and/or polarization mode dispersion; FIG. 9A is a schematic diagram of an optical communication system similar to that illustrated in

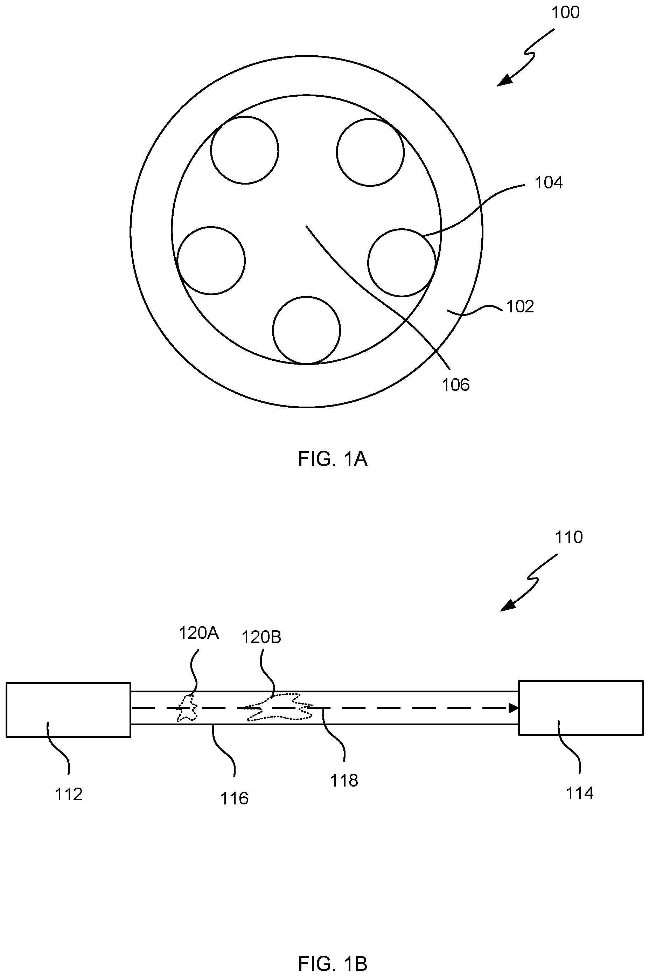

FIG. 1A, but where the system comprises an apparatus for mitigating gas line absorption, intermodal interference, and/or polarization mode dispersion;

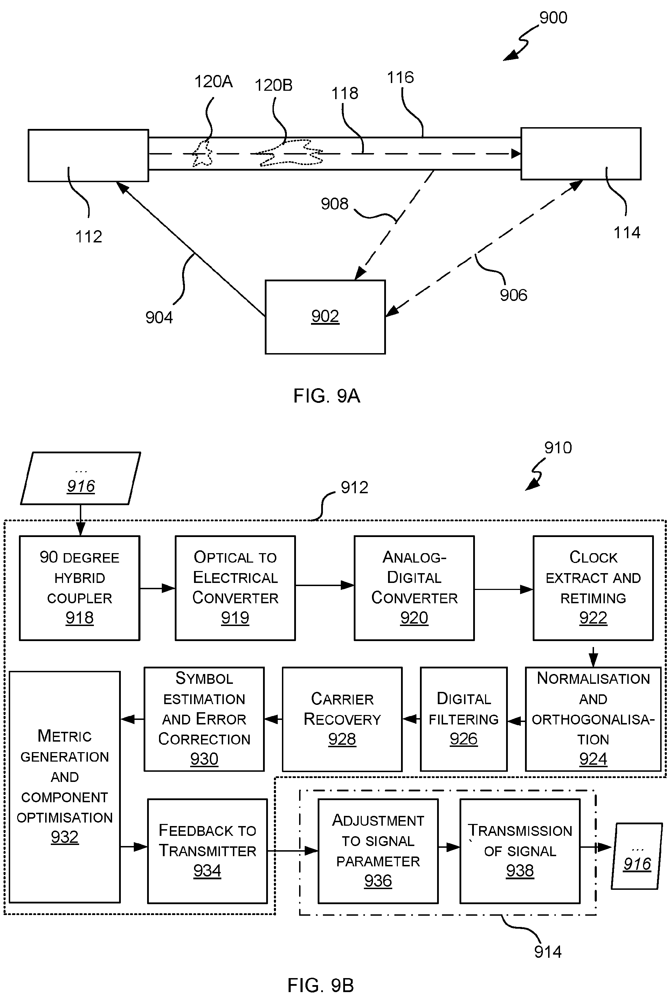

FIG. 9B is a schematic diagram of the stages of an optical signal processing method implemented in an optical communication system such as that illustrated in FIG. 9A;

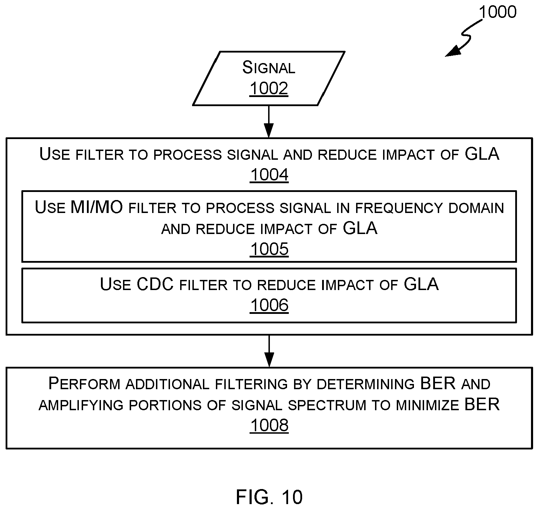

FIG. 10 is a flow diagram of a method performed at a receiver to adjust a property of a signal in a digital domain and reduce the impact of gas line absorption on the signal; and

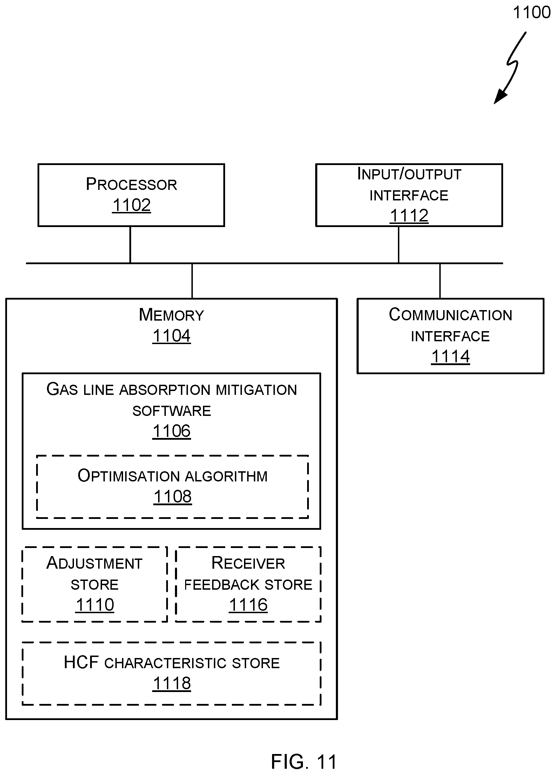

FIG. 11 is a schematic diagram of an exemplary computing-based device in which embodiments of the gas line absorption mitigation method described herein are implemented.

Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

FIG. 1 is a schematic diagram of a transverse cross-sectional view of a hollow core fiber 100. A hollow core fiber (HCF) is a type of optical fiber that guides light through a central hollow core, surrounded by cladding. HCF 100 comprises a hollow core 106, a tubular outer cladding (or jacket) 102, and a structured, inner cladding (referred to herein as microstructure) comprising a plurality of tubular cladding capillaries 104. The outer cladding 102 has a thickness that is typically much larger than that of the cladding capillaries 104 and in many examples is much thicker than shown in FIG. 1A.

Though the microstructure is illustrated as a plurality of capillaries in contact with (e.g. bonded to) the inner surface of the outer cladding 102 at respective azimuthal locations such that the capillaries are evenly spaced and with a gap between neighbouring capillaries, in alternative designs, the capillaries are positioned in contact with each other or with varying spacing. The microstructure of a HCF may also have many possible structures in addition or alternative to the illustrated capillaries, including nested capillaries (i.e. an additional capillary located interior to an outer capillary 104), and/or capillaries with a triangular, teardrop, or other cross-sectional shape.

The arrangement of the capillaries 104 in a ring around the inside of the tubular outer cladding 102 creates a central space, cavity, or void within the fiber, also with its longitudinal axis parallel to those of the outer cladding 102 and the cladding capillaries 104, which is the fiber's hollow core 106. The hollow core 106 is bounded by the inwardly facing parts of the outer surfaces of the cladding capillaries 104. This is the core boundary, and the material (glass or polymer, for example) of the capillary walls that make up this boundary contributes to the optical guidance effect or mechanism. The optical guidance effect is provided by reflections of light in the hollow core by the core boundary, and further reflections of light in the capillary wall by a capillary boundary between a wall of the capillary and an interior space, cavity or void encompassed by the capillary. The cladding capillaries 104 have a thickness, t, at the core boundary which defines the wavelengths for which optical guiding occurs in the HCF.

A HCF as described can be used to guide transmitted light which is coupled into the hollow core 106, and is therefore usable to transmit a signal.

FIG. 1B is a schematic diagram of an optical communication system comprising a hollow core fiber such as the fiber 100 of FIG. 1A. HCF 116 connects a transmitter 112 and a receiver 114, such that an electromagnetic signal (e.g. a light wave) produced by the transmitter 112 can be coupled into the hollow core of the HCF 116, transmitted to and subsequently received by the receiver 114.

A transmitter, as defined herein, is an apparatus that is operable to generate an electromagnetic signal and output the signal. The transmitter is, in the context of an optical communications system, operable to cause the generated electromagnetic signal to be coupled into a hollow core of a connected HCF. In some cases, the transmitter comprises a laser source and a modulation apparatus, as will be elaborated upon below.

A receiver, as defined herein, is an apparatus that is operable to receive an electromagnetic signal, and in some cases perform a signal processing operation on the received signal. Such a signal processing operation can include demodulation, filtering, and/or signal conversion.

Because an electromagnetic signal is transmitted between the transmitter 112 and the receiver 114, data can be transmitted between the transmitter 112 and the receiver 114. This is because the transmitter 112 can cause a generated electromagnetic wave to be modulated to produce a generated modulated signal, and then cause the modulated signal to be transmitted via the HCF 116. The modulation of the generated wave by the transmitter 112 is controlled by received, by the transmitter, data to be transmitted (i.e. encoded in a transmitted signal). For example, electrical data, which represents or is the data to be transmitted, may be used by the transmitter to directly modulate the generated wave. The data to be transmitted is in various examples analog data, in which case the modulation of the generated wave reflects the analog signal of the data. In other examples the data to be transmitted is digital data, in which case the data represents bits, and the modulation of the generated wave reflects two possible states for a defined time period, each respectively indicating a value of 1 or a value of 0. Modulation refers to modifying one or more properties of an electromagnetic wave (e.g. signal), the properties comprising, for example, a phase, amplitude, frequency, and/or polarization of the wave.

The transmitter 112 generates an electromagnetic wave in various examples by operating a laser source to produce a coherent electromagnetic wave. The coherent electromagnetic wave is modulated upon generation for example by changing an input driving current or voltage of the laser source in accordance with an electrical signal (or electrical data) representing data to be transmitted by the transmitter 112. Alternatively or in addition, the coherent electromagnetic wave is modulated after generation by applying the coherent electromagnetic wave to a thermo-optic material such as a silicon or a polymer, which is operable in response to the electrical signal representing data to be transmitted, to change its refractive index and therefore to modulate a phase and/or amplitude of the impinging electromagnetic wave.

Though in some cases a signal comprising a single modulated electromagnetic wave is transmitted via the HCF 116, in other cases the signal comprises a plurality of modulated electromagnetic waves such that the signal at a given point is associated with a frequency spectrum. This combination of modulated electromagnetic waves in a signal is achieved using multiplexing and by splitting the signal into distinct frequency bands (i.e. channels) each associated with a respective electromagnetic wave which is independently modulated by the transmitter 112.

In response to a modulated signal being produced by the transmitter 112 and coupled into the hollow core of the HCF 116, the modulated signal is guided by and transmitted via the HCF 116, following the path 118 to the receiver 114.

At the receiver 114, the received modulated signal is demodulated to recover the data used to control the modulation of the electromagnetic signal by the transmitter 112. As such, data is transmitted from the transmitter 112 to the receiver 114.

The demodulation of the signal at the receiver 114 can result in errors, being differences between the data used to control modulation at the transmitter 112 and the data recovered by the receiver 114. These errors in some cases occur because of differences between the received signal at the receiver 114 and the transmitted signal by the transmitter 112, for example because of loss associated with the signal over the length of the HCF 116 between the transmitter 112 and receiver 114, due to damage to microstructure of the HCF caused during laying of the fiber or resonance effects within the HCF. As advances in techniques for low-loss HCFs have been developed, longer HCFs and/or lengths of HCF with lower losses have become more feasible to use in optical communication systems such as in system 110, than previously.

However, a signal also experiences degradation, especially pertinent to accurate recovery of data through demodulation at receiver 114 at high HCF lengths of 100 kilometers or more, due to gas line absorption effects. The hollow core of HCF 116 comprises regions of gas 120A, 120B, through which the modulated signal transmitted along the path 118 passes. The regions of gas 120A, 120B in some cases comprise same gas species and in other cases comprise different gas species. It should be appreciated that, although the regions of gas 120A, 120B are illustrated as distinct volumes of gas, in various examples gas volumes having different dimensions to those illustrated are present within the hollow core of a HCF. For example, a majority or even a totality of the hollow core may comprise a volume of gas.

Gas is present within HCFs for a number of reasons. Damage to a HCF, for example fractures in the outer cladding or to an end face, during splicing to connect two lengths of HCF into a longer length of HCF, can result in gas ingress from the surrounding environment. Additionally, a manufacturing process of a HCF can result in gas being present within a hollow core of the manufactured HCF, such as where a perfect vacuum in the core is targeted but is not created, and where gas is introduced to the hollow core from the surrounding atmosphere.

Examples of gases that are in various cases present within a hollow core of a HCF include: carbon dioxide, ammonia, carbon monoxide, nitrogen, methane and acetylene, water vapor, and any other gas that is present in air.

Gas present in a hollow core of a HCF, e.g. HCF 116, results in a degradation of the modulated signal transmitted through the gas because the gas absorbs energy from the modulated signal at a specific range of frequencies, and therefore reduces an amplitude of the modulated signal within the specific range of frequencies. In some cases, such as where a density of gas over the path of the signal is high, the specific range of frequencies is removed from the modulated signal transmitted by the transmitter 112 by the time the modulated signal is received by the receiver 114. As such, there is less information available at the receiver regarding properties of the modulated signal, which means that demodulation is more challenging and can result in inaccuracies and even missing data in the reconstructed data at the receiver 114, relative to the data used to construct the modulated signal at the transmitter 112. Even where the signal transmitted by the transmitter 112 is not modulated, an amplitude and an effective power of the signal at the receiver 114 is reduced by gas line absorption.

Typically, an electromagnetic signal having a frequency in the visible light or infrared range is used for optical fiber communications, such as a frequency of approximately 1-1000 THz. The frequency of the electromagnetic signal is chosen, for example, such that the signal is reflected and guided as desired along a hollow core optical fiber without being transmitted transversely and away from the hollow core. The frequency range of the transmitted signal via the HCF 116 therefore overlaps, in this case, with a gas line absorption frequency associated with carbon dioxide of 190.6 THz (it should be appreciated that carbon dioxide has additional different gas line absorption frequencies). It should further be appreciated that even where different frequencies of electromagnetic signal are modulated and transmitted via the HCF 116, gas line absorption still in various examples occurs due to the presence of gases other than carbon dioxide within the HCF 116.

As defined herein, a gas line absorption frequency is a central frequency of a gas line absorption profile of a gas, which is a profile defined by the frequencies at which the gas absorbs energy from an impinging electromagnetic wave and therefore causes an amplitude of the impinging wave to decrease. Though the magnitude of the gas line absorption profile of a gas depends on the amount of the gas encountered by and affecting the wave along its path, the shape of the profile and the gas line absorption frequency for a gas are consistent quantities, and may be known such as from a database of gas line absorption frequencies and/or profile shapes.

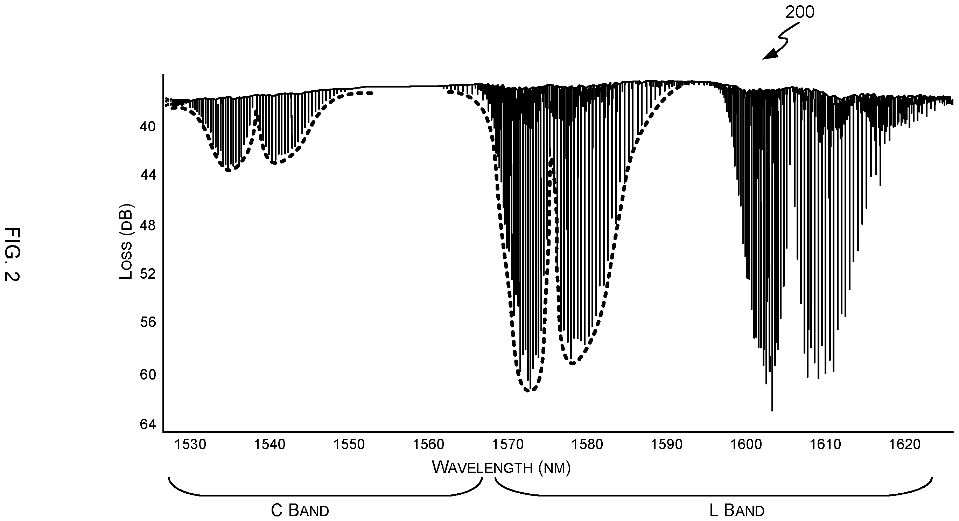

To further illustrate the impact of gas line absorption on a signal transmitted via a HCF comprising a gas, for example the impact of gas line absorption (GLA) on a signal transmitted via the path 118 in optical communication system 110, FIG. 2 will now be described.

FIG. 2 is a chart 200 showing a wavelength of a wave that is transmitted via a HCF, in nm, against a loss in dB of the wave due to gas line absorption in the HCF by carbon dioxide. The chart depicts the impacts of gas line absorption across the L-band (long band) having a wavelength range of approximately 1565 - 1625 nm, and across the C-band (conventional band) having a wavelength range of approximately 1530 - 1565 nm. The C-band and L-band are defined for optical fiber transmission.

It is desirable that at each wavelength and therefore frequency of an electromagnetic wave transmitted via a HCF, there is a same loss over the length of the HCF, because the modulated signal used for transmission in optical communication systems comprises in some cases multiple frequency components each being an electromagnetic wave with a respective frequency. Differing losses between each frequency component of the modulated signal means that demodulation is more challenging and that errors are likely to be introduced between recovered data at a receiver and data used to generate the modulated signal at a transmitter. Additionally, it is desirable that a loss over the path of the signal via the HCF is minimal, so that a signal-to-noise ratio of the signal at the receiver is as high as possible.

As shown, gas line absorption results in undesirable effects on a signal transmitted via a HCF for optical communications. The dotted lines represent gas line absorption profiles with respective gas line absorption frequencies associated with carbon dioxide. Illustratively, wavelengths of 1530-1545 nm, for example, have higher associated losses than wavelengths of 1555-1560nm. Wavelengths of 1570-1580nm have even higher associated losses. As such, a signal comprising a frequency component being an electromagnetic wave with a wavelength of 1575nm (thus a frequency of 190.3 THz) would experience a higher loss, when travelling via a path through a HCF that impinges upon a region of carbon dioxide gas, than a frequency component, of the signal, being an electromagnetic wave with a wavelength of 1535nm (thus a frequency of 195.3 THz). The signal would therefore be negatively impacted by gas line absorption by carbon dioxide.

Though C-band and L-band transmission via a HCF and carbon dioxide gas line absorption frequencies have been described, in various examples different signal frequencies are used and experience gas line absorption effects due to different gases present within the HCF and/or different gas line absorption frequencies.

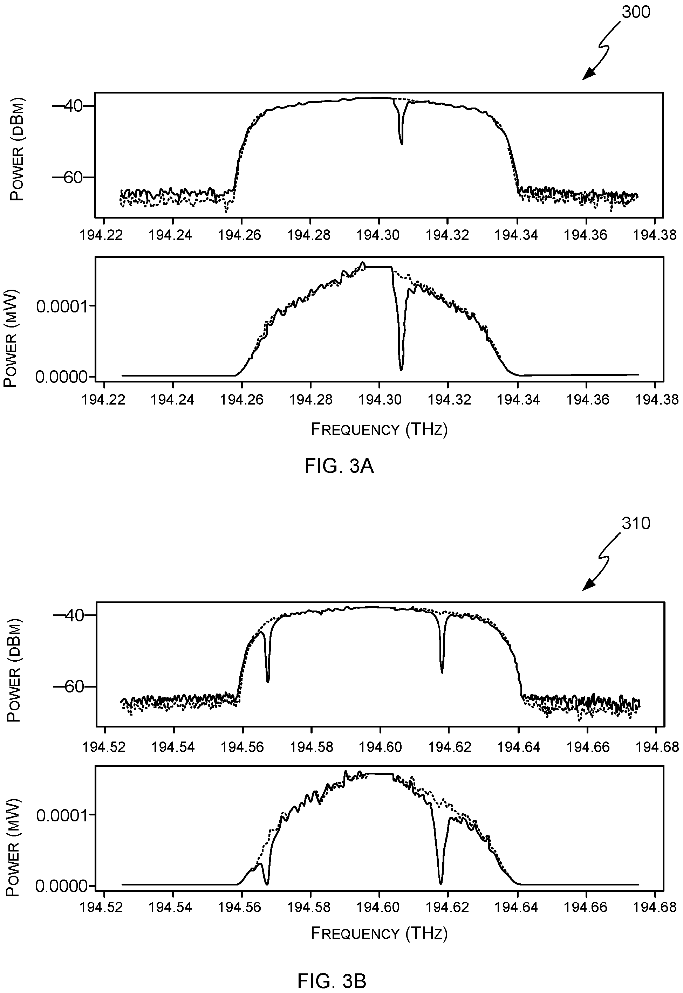

FIGS. 3A and 3B are charts 300, 310 further illustrating the impact of gas line absorption on a transmitted signal via a HCF, such as HCF 116 of FIG. 1B. The dotted line in both charts corresponds to a signal transmitted by a transmitter such as transmitter 112 of FIG. 1B, and the solid line in both charts represents a signal received by a receiver such as receiver 114 of FIG. 1B.

Within each chart 300, 310, the upper sub-chart shows the intensity of the respective signals, i.e. power of the respective signals, in units of decibel-milliwatts (dBm), and the lower sub-chart shows the intensity of the respective signals on a linear scale in milliwatts (mW).

A single channel of the signal is illustrated in each of charts 300 and 310, the channel of chart 300 having frequencies from approximately 194.26 THz to 194.34 THz, i.e. the channel having a bandwidth of approximately 80 GHz. The channel of chart 310 has frequencies from approximately 194.52 THz to 194.68 THz. As such, the signal corresponding to the charts 300 and 310 comprises an electromagnetic wave which is modulated to have, over time, frequencies within the frequency range of the channel (194.26 - 194.34 THz or 194.52 - 194.68 THz, respectively). The signal is transmitted via a HCF, as described with respect to FIG. 1B, the HCF comprising a gas which has a GLA frequency within the frequency range of the channel. The charts 300 and 310 illustrate a spectrum of the signal. Though a single channel of a signal is illustrated, in various examples a signal comprises a plurality of channels, wherein one or more of the channels overlap with a GLA frequency.

As illustrated, the GLA causes the spectrum of the received signal to have a notch i.e. a drop in intensity at a frequency corresponding to the GLA frequency of the gas within the HCF. As such, the received signal at a receiver comprises a frequency component having a frequency corresponding to the GLA frequency of the gas with a lower amplitude than the same component during transmission at a transmitter. This can make demodulating the signal challenging because the frequency components of the signal are not equally affected by the transmission. Reconstruction of the transmitted modulated signal and therefore the data used to control the modulation at the transmitter is therefore challenging.

Additionally, in cases where the GLA causes a significant drop in intensity, information about a frequency component affected by the GLA can be lost completely, especially where noise introduced by the transmission system results in a signal-to-noise ratio at the receiver that is too high to demodulate and recover the original transmitted data with a threshold accuracy.

FIG. 3A shows a single GLA profile, whereas FIG. 3B shows two GLA profiles. In both cases, GLA impacts the spectrum of a transmitted signal by the time the transmitted signal is received. Though a single GLA profile and two GLA profiles, with respective GLA frequencies, have been illustrated, it should be appreciated that in various examples three, four, seven, ten or any other number of GLA profiles impact the spectrum of a transmitted signal, based on the bandwidth of the transmitted signal. As briefly mentioned above, the specific GLA profiles affecting a spectrum of a signal, and specifically of a modulated signal, depend upon the gases present in a HCF and that are impinged upon by the signal transmitted via the HCF (and subsequently received at a receiver).

Described herein are methods for mitigating gas line absorption of a signal transmitted via a hollow core fiber by a transmitter, which may be used in an optical communication system comprising a HCF to improve a quality of a signal and reduce a number of errors when a modulated signal is demodulated. Especially, as low-loss hollow core fibers have been developed, enabling longer-length HCFs than were previously available, the impact of GLA on a signal transmitted via the longer-length HCFs is non-negligible and substantially affects a quality of the signal and therefore an accuracy of demodulation. Reducing the impact of the GLA therefore enables signal transmission for optical communications with a greater accuracy and/or over a longer length of HCF.

The methods comprise computing an adjustment to be made to a property of the signal, the adjustment being an adjustment to change one or more of a frequency and an amplitude of the signal to reduce an impact of gas line absorption on the signal. By changing the frequency and/or reshaping the amplitude of the signal, it is enabled that the impact of GLA on the signal is reduced.

The methods further comprise configuring one or more of: the transmitter to cause the adjustment to be applied to the signal during transmission of the signal, via the hollow core fiber, by the transmitter; and a receiver configured to receive the signal transmitted via the hollow core fiber, to cause the adjustment to be applied to the signal after the receiver receives the signal. In both of these cases, the adjustment is caused to be applied such that, when the signal is transmitted and received (i.e. during normal use of an optical communication system comprising the transmitter and the receiver), the signal is less impacted by GLA than prior to the adjustment.

Examples of properties of a signal transmitted by a transmitter that are in various examples adjusted to mitigate e.g. reduce the impact of GLA on the signal will now be described.

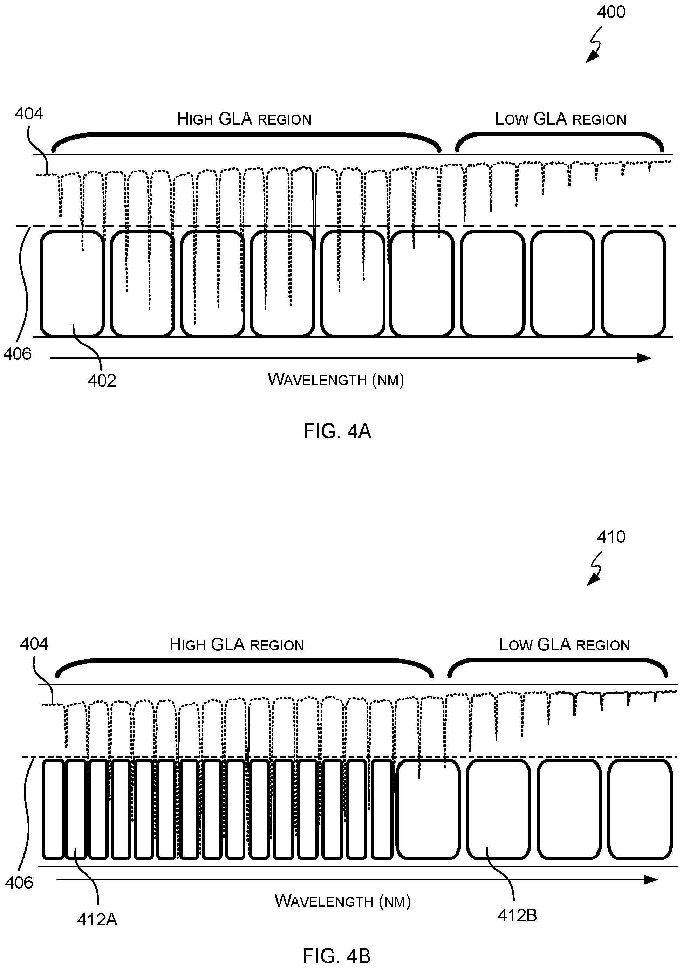

FIG. 4A is a schematic diagram 400 showing a spectrum of a modulated signal that is transmitted via a HCF, the signal comprising a plurality of channels 402. Each channel has a same power allocation, represented by baseline power allocation level 406. Additionally, each channel 402 has a same bandwidth, where the width of each channel 402 as illustrated corresponds to a respective wavelength (and therefore frequency) range of the channel 402. In some cases a signal component of the modulated signal has a frequency that is modulated within a respective channel, however, in other cases, the signal component has a substantially constant frequency within the respective channel and has a property different to its frequency, e.g. phase and/or amplitude, that is modulated.

Line 404 illustrates an impact of GLA on a transmitted spectrum, where each deep trough represents a decrease in an amplitude of a transmitted signal at a corresponding frequency due to GLA by a gas in the HCF. As illustrated, there are a plurality of GLA frequencies which overlap with a channel 402. Because the transmitted signal comprises electromagnetic waves each being modulated within boundaries of a respective channel, the signal comprises frequency components which are affected by GLA, because the signal impinges upon the gas in the HCF during transmission via the HCF.

Especially, lower-frequency channels towards the left side of the chart are impacted, on average, more than higher-frequency channels towards the right side of the chart, because the GLA profiles at lower frequencies in the modulated signal spectrum are deeper (i.e. have a higher magnitude) than GLA profiles at higher frequencies in the modulated signal spectrum.

In various examples, a frequency of a channel 402 is adjusted to mitigate the impact of GLA on the transmitted modulated signal comprising the channel 402.

FIG. 4B is a schematic diagram 410 illustrating such a frequency adjustment. A channel 412A proximate to a first GLA frequency has its bandwidth decreased relative to the prior configuration illustrated in FIG. 4A, so as to reduce the impact of GLA at the first GLA frequency on a signal comprising the channel 412A. For example, the channel 412A may correspond to the channel 402 but after adjustment. The impact of the GLA is reduced because the smaller bandwidth of the channel 412A means that the first GLA frequency is avoided, i.e. that an overlap of the first GLA frequency (and therefore a GLA profile) and the frequency range of the channel 412A is reduced. By reducing the overlap of a GLA profile and a frequency range of a channel, even where there is still some overlap, the magnitude of the GLA profile within the frequency range of the channel is reduced. This means that the GLA associated with the GLA profile has less of an impact on the modulated signal which comprises the channel.

Additionally or alternatively, a central frequency (and therefore wavelength) of a channel is adjusted to move the channel away from the first GLA frequency and therefore reduce the impact of the GLA at the first GLA frequency on the signal. A plurality of channels may each have a respective frequency (e.g. central frequency and/or bandwidth) adjusted.

As defined herein, a signal or channel being proximate to a GLA frequency refers to the signal or channel being within a threshold frequency difference with respect to the GLA frequency, such that GLA at the GLA frequency affects the signal or channel. A channel proximate to a GLA frequency has a bandwidth which overlaps with a GLA profile associated with GLA at the GLA frequency.

In various examples, whilst a channel 412A has a respective frequency adjusted, a channel 412B which is less affected by GLA does not have a respective frequency adjusted. A channel 412B which is less affected by GLA refers to an electromagnetic wave which is modulated within the channel 412B being reduced in amplitude due to GLA, by an amount less than an amount that an electromagnetic wave which is modulated within the channel 412A is reduced in amplitude due to GLA. Maintaining a higher bandwidth in the channel 412B relative to the bandwidth of the channel 412A enables a higher maximum data transfer rate associated with the channel 412B and further enables that less components, such as lasers, are used in the transmitter and the receiver to construct and demodulate the channel 412B respectively.

In addition to adjusting the frequency of a channel, in some cases a number of channels, or in some cases sub-channels, comprised in the modulated signal is further adjusted, as illustrated in diagram 410. Because the bandwidth of channel (in some cases sub-channel) 412A is reduced relative to a prior configuration (e.g. relative to channel 402 of FIG. 4A), space in the modulated signal spectrum is introduced relative to the prior configuration of the modulated signal.

To provide for more information to be transmitted by the modulated signal, an additional channel or sub-channel may be introduced. In some cases, an additional channel is introduced to the modulated signal such that an additional electromagnetic wave is modulated within the boundaries of the additional channel to provide an additional signal comprised in the modulated signal. The additional channel does not overlap with an existing channel.

Alternatively or additionally, a sub-channel (e.g. 412A) which has a reduced bandwidth relative to a prior configuration is provided by dividing the prior configuration (e.g. channel 402 of FIG. 4A) into one or more sub-channels, e.g. which comprise in this case sub-channel 412A. The one or more sub-channels are located within a bandwidth of the prior channel 402, for example, and may each have central frequencies and bandwidths that are independently adjusted to reduce an impact of GLA on the respective sub-channel, relative to the impact of GLA on the channel comprising the one or more sub-channels.

Additionally or alternatively to an adjustment to a frequency of a channel, a power allocation of a channel is in some cases made, so as to reduce the impact of GLA on a signal comprising the channel.

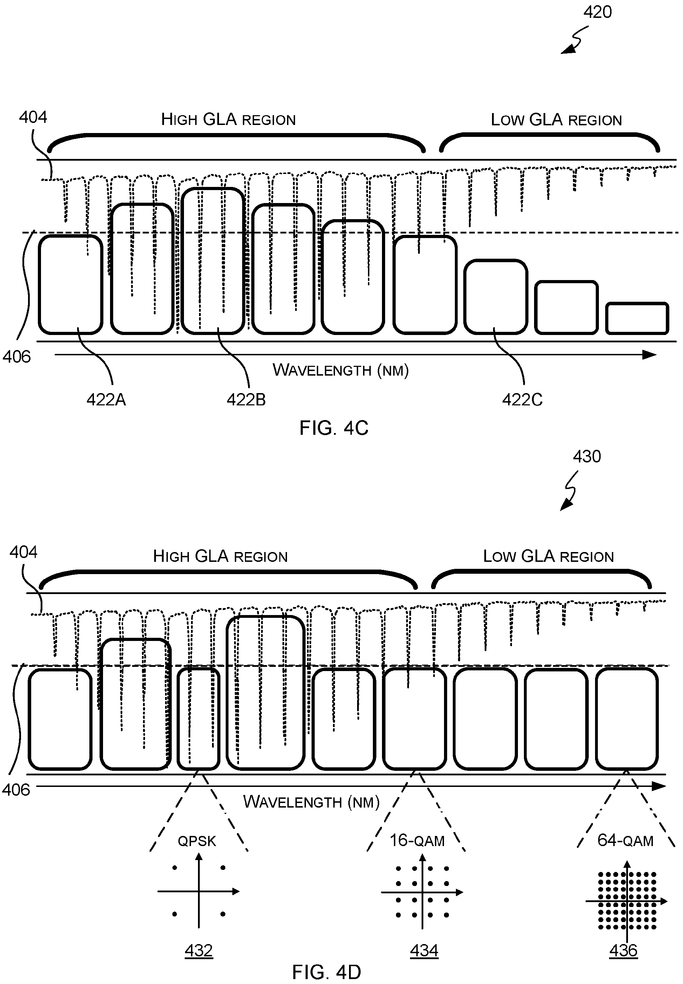

FIG. 4C is a schematic diagram 420 showing channels of a modulated signal as illustrated in FIG. 4A, but where the power allocation across the channels is adjusted. Channel 422B has a frequency range which overlaps with two particularly deep GLA profiles, relative to other GLA profiles across the spectrum of the modulated signal. Channel 422B is therefore proximate to a GLA frequency, and is affected by the GLA at the GLA frequency, causing a decrease in amplitude of a frequency component within the channel 422B of the modulated signal, during transmission of the modulated signal via the HCF.

An amplitude of a signal component within the channel 422B is therefore increased, for example by a power allocation to the channel 422B being increased relative to the baseline power 406. The power allocation of each channel is indicated by the height of the respective channel in the diagram 420.

The power allocation of or to a channel as defined herein refers to a power provided by a transmitter (comprising an optical amplifier) and used to produce an electromagnetic wave modulated to provide a modulated signal within the channel, which can be combined with other signals to produce a modulated multichannel signal for transmission. A high power allocation to a channel is required for a high amplitude within the channel of a produced modulated signal by a transmitter, relative to a low power allocation to the channel.

By increasing the power allocation of a channel 422B, the amplitude of a transmitted signal having a frequency component within the channel is increased, relative to a baseline power allocation 406. The GLA that would otherwise have reduced the amplitude of a signal component within the channel 422B if it had a baseline power allocation 406 therefore reduces the amplified signal component within the channel 422B. This results in a higher amplitude of the signal component within the channel 422B after transmission via the HCF than if the signal component was not amplified. The impact of GLA on a portion of the signal that is adjusted is therefore reduced.

A transmitter (comprising an optical amplifier) used to transmit the modulated signal in some cases has a limited total power allocation, and/or has a limited gain such that the transmitter is unable to amplify a generated signal beyond a threshold amount. In these cases, in response to amplification of a signal component within a first channel 422B, e.g. in response to a power allocation of a first channel 422B being increased relative to a baseline power 406, a power allocation of a second channel 422C may be reduced relative to the baseline power 406. This results in an amplitude of a signal component within the second channel 422C being decreased, and in some cases results in a total power allocation across all of the channels of the signal remaining unaffected.

The second channel 422C which has a power allocation reduced is chosen in some cases because the impact of GLA on a signal component within the second channel is lower than an impact of GLA on a signal component within the first channel which has a power allocation increased. It should be appreciated that, in some cases, an amplification of a signal component within a channel 422A (e.g. a power allocation of the channel) is not adjusted even where the signal component is proximate to a GLA frequency.

In various examples, the choice of which channels to amplify is made by computing an adjustment which reduces an impact of GLA on the signal spectrum as a whole, i.e. such that on receiving the signal after transmission via the HCF, a loss (between the received signal and the transmitted signal) over the entire spectrum of the signal is minimized, or another overall performance metric of the signal is optimized. Alternatively, a loss over corresponding portions of the signal may be minimized, or another performance metric associated with a portion of the signal may be optimized.

The performance metric associated with a portion of the signal as described herein refers to an indication of an ability of a portion of a spectrum of the signal to perform its function, e.g. for a modulated signal component comprised in the portion to encode a data element and be accurately decoded, and for a pilot tone comprised in the portion to be used to accurately perform a side-operation. Examples of a performance metric associated with a portion of the signal comprise a bit error rate over the portion of the signal, a data rate of portion of the signal (i.e. how much data is encoded per time period by the signal), an average difference between a demodulated data element and a data element used to modulate a signal for transmission (which is then received as the received signal) over the portion of the signal, an error vector magnitude over the portion of the signal, and/or any other performance metric.

Though it has been mentioned that a transmitter may have limited power to allocate to signal channels of a produced signal, or otherwise be limited in the gain that the transmitter can apply to generate a signal with a higher amplitude than a reference amplitude of a signal component within a channel, in some cases the baseline power allocation or reference amplitude are such that the transmitter maintains capability to increase a power allocation or amplitude of a first channel without reducing a power allocation or amplitude of a second channel. Such a case is illustrated in FIG. 4D, in which two channels have their respective power allocations increased at a transmitter, but where the other channels depicted stay at the baseline power allocation 406.

FIG. 4D illustrates a further adjustment that can be made additionally or alternatively to an adjustment to a frequency and/or power allocation of a channel. The further adjustment is an adjustment to a modulation format of a signal, in the illustrated example being an adjustment to a modulation format of a channel comprised in the signal, so as to reduce an impact of GLA on the signal.

In some cases, the adjustment to the modulation format of a channel is made in response to an optical signal-to-noise ratio of the channel at a receiver being smaller than a threshold ratio, wherein the receiver receives a signal comprising the channel. The adjustment to the modulation format of a channel may also be performed in response to a different adjustment, such as an adjustment to an amplitude (e.g. power allocation) or a frequency of a channel, resulting in an optical signal-to-noise ratio of the channel at a receiver being smaller than a threshold ratio, such that the adjustment to the modulation format acts as a fallback adjustment.

A modulation format, as defined herein, refers to a parameter controlling how data is represented as a modulation of a signal. For example, a transmitter may obtain, for example by receiving and/or accessing, input data comprising values of 1 and 0 (representing bits of the data). The transmitter may then modulate an electromagnetic wave to represent a value of 1 as a first state of properties of the electromagnetic wave, e.g. first frequency and first amplitude. The transmitter may also modulate the electromagnetic wave to represent a value of 0 as a second (different to the first) state of properties of the electromagnetic wave, e.g. second frequency and second amplitude. At predefined time periods, the transmitter may switch between the first and second states of properties, and transmit the modulated wave as a modulated signal via a HCF. Upon receiving the modulated signal, a receiver, which is provided with the predefined time periods, can demodulate the modulated signal to recover the original values (being 0 or 1) per predefined time period.

The possible states of properties of the electromagnetic wave, each state representing a particular value, defines a modulation format. Each state of properties is also referred to as a constellation point, where the possible states of properties of the electromagnetic wave can be represented by a constellation, such as constellations depicted in modulation formats 432, 434, and 436.

A modulation format comprises, for example, a constellation size, forward error correction overhead, constellation shape (defined by probabilistic constellation shaping or geometric constellation shaping), and baud. The possible modulation formats for a channel depend on whether a signal component within the channel is controlled at a transmitter using analog data, or using digital data.

A constellation size of a channel refers to a number of constellation points within the channel. A higher constellation size refers to a higher number of constellation points and therefore a higher number of possible states of a signal within a channel. A higher number of possible states means that more bits are capable of being transmitted at once by the channel. For example, a constellation of a channel with two constellation points can represent either a 0 or a 1 (i.e. one bit per predefined time period). However, a constellation of a channel with four constellation points can represent a 00, 01, 10, or 11, and therefore can represent two bits per predefined time period.

For a same bandwidth of a channel, however, a higher constellation size means that the constellation points of the constellation, for example where the constellation points differ in frequency, are more closely spaced than if a lower constellation size was used for the channel. This means that a receiver, to reconstruct the data used to modulate a transmitted signal, needs to distinguish between more closely spaced frequency components of a signal within a channel. This can be challenging, especially where noise and other medium distortions are present, and too high of a constellation size can mean that noise and distortion results in an increase in an error rate between a recovered bit by a receiver and a corresponding bit used to control modulation at a transmitter. Inversely, decreasing a constellation size of a channel can increase the signal-to-noise ratio of the frequency components, for example, at a receiver, at the cost of a reduced number of bits able to be transmitted per predefined time period by the transmitter.

In another example, different constellation points of a constellation of a channel represent different amplitudes and/or phases of a signal component. A higher constellation size means that a receiver needs to accurately distinguish between more closely spaced amplitudes and/or phases in order to determine the constellation point which reflects a signal component state accurately. This enables determining the data represented by the signal component accurately. Especially, an increase in constellation size for a channel with fixed boundaries (i.e. a fixed range of amplitudes and phases which can be modulated to) increases the probability of noise impacting the determination at a receiver of the constellation point reflecting a signal component state. An error rate associated with demodulation at the receiver therefore increases. Inversely, a lower constellation size for the channel with fixed boundaries reduces a probability of noise causing a state of the signal component to be incorrectly computed, therefore reducing the error rate.

A forward error correction overhead of a channel refers to an amount of redundant information used alongside data to produce a modulated signal at a transmitter. The redundant information is encoded within the modulated signal alongside the data to enable detection and correction of errors (i.e. forward error correction) at a receiver of the modulated signal. Reducing a forward error correction overhead results in more of the data (rather than the redundant data) being transmitted by the transmitter using the modulated signal in a predefined time period, but a lower chance of detecting and correcting errors in the data at the receiver. A higher optical signal-to-noise ratio within the channel of the modulated signal is therefore required for a same accuracy of demodulating the modulated signal.

Geometric constellation shaping of a channel refers to adjusting a position of the constellation points within a constellation of a channel without taking into account how often the constellation points are used to represent data, and can be used to increase a signal-to-noise ratio required to accurately demodulate a signal component of the channel as described with reference to the positioning of constellation points regarding constellation size.

Probabilistic constellation shaping of a channel refers to a technique involving adjusting how frequently a constellation point, within a constellation of the channel, is selected (i.e. how frequently a signal component is modulated to the state defined by the constellation point). The adjusting is such that a goal state is targeted, the goal state being that a data rate is maximized, the data rate being for example an overall data rate - the amount of data transmitted per second by the system or channel in which the probabilistic constellation shaping is implemented. To perform the adjusting whilst targeting the goal state, an optimization is performed, which in various examples takes into account the required power for each symbol associated with a respective constellation point to be transmitted, and in some cases the noise or any other distortion applied on the symbol (i.e. applied to a signal component which is modulated to the state defined by the symbol).

Because the position of a constellation point within a constellation defines a property of a possible state of a signal component, for example defining an amplitude and frequency and/or phase of the signal component, the position defines a required power to transmit a corresponding symbol to the constellation point, because an amplitude of the state defined by the constellation point is proportional to the required power.

In cases wherein all symbols associated with respective constellation points within a constellation experience a same noise and distortion level, constellation points associated with a lower required power for transmission may be sent more frequently than constellation points associated with a higher required power for transmission, whilst maintaining a limited total transmission power. This factor is leveraged in order to perform the optimization, because constellation points may thus be positioned further away from each other (compared to for example a uniformly spaced constellation) which facilitates a lower error rate (e.g. bit error rate) due to a receiver being more easily able to distinguish between signal component states defined by the constellation points, whilst keeping the total required transmission power fixed. The optimization therefore computes a frequency of selecting a constellation point for transmission and a constellation point spacing and/or location within the constellation, which maximize a data rate and minimizes an error rate. In some cases, a threshold data rate and/or error rate are implemented such that the optimization computes a frequency of selecting a constellation point for transmission and a constellation point spacing and/or location within the constellation, which provide at least the threshold data rate and/or at most the threshold error rate.

The baud of a channel refers to a number of constellation points that are represented by a signal component within the channel per second. Baud is therefore defined by how often a signal component within a channel is modulated between distinct states. The baud of a channel defines a data transmission rate of the channel in terms of symbol rate. By reducing a baud of a channel, each state of a transmitted signal component within the channel is received for a longer duration at a receiver, thereby meaning that the signal component is less susceptible to distortion caused by noise (which is more erratic over shorter time scales). Therefore, an effective signal-to-noise ratio of the signal component is increased by reducing a baud of the channel. In an alternative perspective, a required signal-to-noise ratio to demodulate the signal component at a receiver with a same accuracy is reduced when a baud of the channel is reduced.

By adjusting the modulation format of a channel, an optical signal-to-noise ratio of a signal comprising the channel, at a receiver of the signal, can be increased. An optical signal-to-noise ratio of the signal at a receiver required to demodulate the signal with a same accuracy can also be reduced. Such an adjustment can therefore be used to reduce the impact of GLA on a signal comprising a channel proximate to a GLA frequency, because the GLA reduces an amplitude of a signal component within the channel and distorts the signal, and therefore, for a same noise, reduces a signal-to-noise ratio of the signal component. By adjusting the modulation format to increase the signal-to-noise ratio of the signal component, or to reduce a required signal-to-noise ratio to demodulate the signal component with a same accuracy, the impact of the GLA can be countered.

As mentioned, diagram 430 illustrates an adjustment made to a modulation format of a channel.

A baseline modulation format for each channel may be format 436, which comprises a 64-quadrature amplitude modulation (64-QAM) format. In this format, a constellation of the channel comprises 64 constellation points, each point representing for example a sequence of 6 possible bits, from 000 000 to 111 111. To implement this format, in an example two electromagnetic waves are generated and combined by a transmitter such that the phases of the two waves are orthogonal to each other (i.e. their phases are 90° apart), to produce a signal component. Each electromagnetic wave is then modulated between 8 possible states such that the signal component is modulated between the 64 possible states represented by the 64 constellation points to produce a modulated signal component within a respective channel. This modulation format has a high data transfer rate, but may be susceptible to noise which reduces a signal-to-noise ratio of the modulated signal component, and a receiver may require a high, relative to the other mentioned modulation formats below, signal-to-noise ratio to accurately demodulate the modulated signal component since the constellation points are closely spaced. Especially, where a channel is proximate to a GLA frequency, a signal-to-noise ratio of the modulated signal component is further reduced due to GLA at the GLA frequency.

A channel proximate to a GLA frequency therefore has, in some cases, an associated modulation format adjusted. Modulation format 434 is an adjustment to a modulation format, for example from the baseline modulation format of the respective channel. Modulation format 434 comprises a 16-quadrature amplitude modulation (16-QAM) format. In this format, a constellation of the channel comprises 16 constellation points, each point representing for example a sequence of 4 possible bits, from 0000 to 1111. To implement this format, in an example, two electromagnetic waves are generated and combined by a transmitter such that the phases of the two waves are orthogonal to each other to produce a signal component, and each electromagnetic wave is then modulated between 4 states such that the signal component is modulated between the 16 possible states represented by the 16 constellation points to produce a modulated signal component within a respective channel. This modulation format has a lower data transfer rate than 64-QAM, but is less susceptible to noise which reduces a signal-to-noise ratio of the modulated signal component. Additionally, the constellation points are more widely spaced than the constellation points in the modulation format 436 (as the respective channel boundaries are equal). A signal-to-noise ratio of a signal component within the channel with modulation format 434 is therefore increased, and a required signal-to-noise ratio to demodulate the signal component with a same accuracy is therefore decreased, by the adjustment from the baseline modulation format 436.

Alternatively, a channel proximate to a GLA frequency has, in some cases, an associated modulation format adjusted to modulation format 432. Modulation format 432 comprises a quadrature phase shift keying (QPSK) format. In this format, a constellation of the channel comprises 4 constellation points, each point representing for example 2 possible bits, from 00 to 11.

To implement this format, in an example, two electromagnetic waves are generated and combined by a transmitter such that the phases of the two waves are orthogonal to each other, to produce a signal component. Each electromagnetic wave is then modulated between two possible states such that the signal component is modulated between the 4 possible states represented by the 4 constellation points to produce a modulated signal component within a respective channel. For the same bandwidth, this modulation format has a lower data transfer rate than 64-QAM and 16-QAM, but is less susceptible to noise which reduces a signal-to-noise ratio of the modulated signal component. A signal-to-noise ratio of a signal component within the channel with modulation format 432 is therefore increased, and a required signal-to-noise ratio to demodulate the signal component with a same accuracy is therefore decreased, by the adjustment from the baseline modulation format 436 and/or from the modulation format 434.

Though specific examples of modulation formats have been described, it should be appreciated that in various examples any modulation format affecting a required signal-to-noise ratio to demodulate a signal component within a channel with a same accuracy is used. Examples of such modulation formats include differential phase shift keying (DPSK), amplitude-shift keying (ASK), amplitude modulation (AM), frequency modulation (FM), and/or 32-quadrature amplitude modulation (32-QAM).

In various examples, a channel having an associated modulation format adjusted is chosen because it is a channel which is more affected by GLA than: another channel that does not have an associated modulation format adjusted, another channel that has an associated modulation format adjusted to increase a signal-to-noise ratio of the channel (i.e. a signal component within the channel) by a lower amount, and/or another channel that has an associated modulation format adjusted to reduce a required signal-to-noise ratio to demodulate the channel at a receiver with a same accuracy.

Though adjustments to properties of a signal relating to a channel of the signal have been described thus far, in various examples an adjustment is made to a property of a signal without affecting the entirety of a channel.

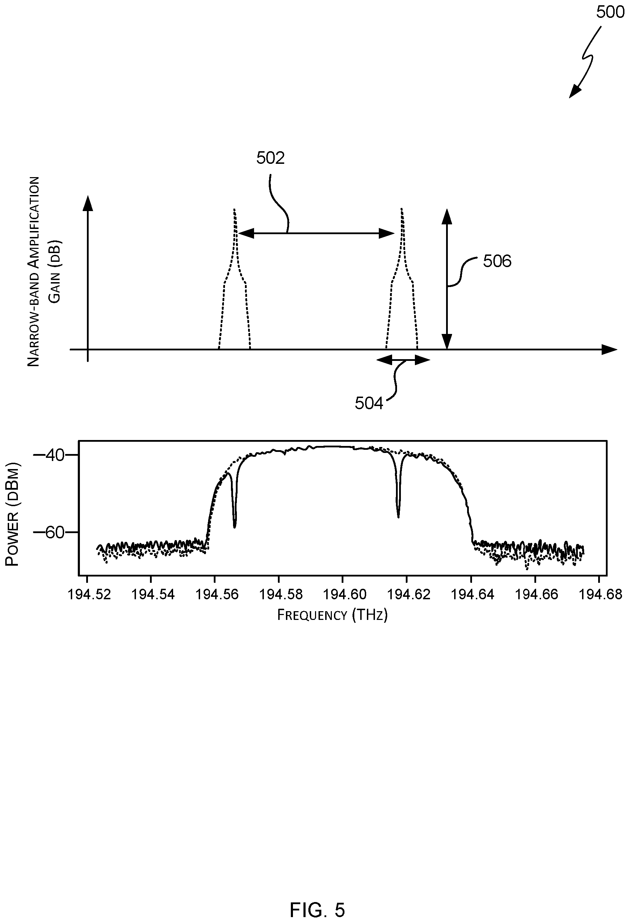

FIG. 5 is a chart 500 illustrating an example of such an adjustment, the adjustment being to a narrow-band amplification of the signal.

Narrow-band amplification, as described herein, refers to amplification of a region of a signal which is smaller than a region of the signal defined by a channel.

Chart 500 shows, in the lower sub-chart, a power (i.e. an intensity on a logarithmic scale, in decibel-milliwatts, dBm) of a signal spectrum over a single channel covering frequencies from approximately 194.56 THz to 194.64 THz, i.e. the channel having a bandwidth of approximately 80 GHz. The dotted line corresponds to a signal transmitted by a transmitter such as transmitter 112 of FIG. 1B, and the solid line represents a signal received by a receiver such as receiver 114 of FIG. 1B. The signal is transmitted via a HCF, as described with respect to FIG. 1B, wherein the HCF comprises a gas which has a GLA frequency within the frequency range of the channel.

The received signal illustrated in chart 500 therefore has a drop in intensity within the channel, relative to the transmitted signal, due to GLA at the respective GLA frequencies within the channel.

To reduce the impact of the GLA on the signal, a narrow-band amplification of the signal is applied. The upper sub-chart of chart 500 shows a narrow-band amplification gain (in decibels, dB) applied to the signal, wherein the gain may be applied at a transmitter prior to transmission and/or at a receiver after receiving the transmitted signal. The amplification gain corresponds to narrow-band amplification because, as illustrated, a region of the signal with a frequency width 504 which is smaller than the frequency width of the channel is amplified.

A profile of the narrow-band amplification gain applied to a signal defines the portions of the signal that are amplified and the degree to which those portions are amplified. The profile of the narrow-band amplification gain is defined in various examples by a gain profile width 504, gain profile height 506, and/or a gain profile frequency location or separation 502 between neighboring gain profiles within a channel, which are each independently adjustable. The gain profile however in various examples is not adjustable over time, thus the gain profile applied to the signal is for example defined during an initial setup of a transmitter and/or receiver. In various examples, the gain profile does not need to be adjusted over time, even in cases wherein the gain profile is adjustable, because the properties of GLA in a HCF and therefore an impact of the GLA on the signal are substantially static over time.

By defining the gain profile such that corresponding narrow-band amplification applied to a narrow-band region of a signal proximate to a GLA frequency is increased, the impact of the GLA at the GLA frequency on the narrow-band region of the signal is reduced. Moreover, by amplifying a narrow-band region of a signal that is proximate to a GLA frequency rather than adjusting properties of a channel of the signal, the adjustments reducing a GLA impact can be targeted to the most impacted regions of the signal by GLA. In this way, for example limited power availability for allocation to a channel (which amplifies portions of the signal which may not be as affected by GLA as a narrow-band region proximate to a GLA frequency) and/or a channel modulation format resulting in a limited data transfer rate, each of which have associated tradeoffs as described above, are enabled to be avoided or reduced whilst mitigating GLA.

A signal comprising signal components which are modulated to represent data received at a transmitter and are then demodulated to recover the data at a receiver has been described thus far. In various examples, though, the signal comprises additional components. One such component is a pilot tone.

A pilot tone is a signal component which is comprised in a signal and which is used for a side-operation of an optical communication system. A pilot tone in various examples is a signal with a narrow-band range of frequencies (being in some cases a single frequency), and in some examples is a signal with a constant frequency, i.e. the tone is not frequency-modulated. The tone is illustratively represented in a spectrum of a signal as a spike in intensity with a peak at a central tone frequency, and with a tone profile (i.e. intensity per frequency) which extends from the central tone frequency. An analog pilot tone, being a distinct signal component from the modulated signal components in a combined signal for data transmission and which is added to the combined signal, can be extracted from the combined signal using optical or electrical filters. However, in some cases, a digital pilot tone is implemented in the combined signal. At a receiver, the digital pilot tone may be extracted using algorithmic techniques from the received signal instead of using optical or electrical filters. A digital pilot tone provides improved flexibility in designing, including configuring parameters of, the pilot tone at a transmitter, and also in enabling extraction of the pilot tone at a receiver.

A side-operation of an optical communication system is an operation that is not demodulation to recover data which is encoded in a signal. Examples of side-operations include synchronization, equalization, control, clock recovery, phase recovery and/or frequency recovery operations.

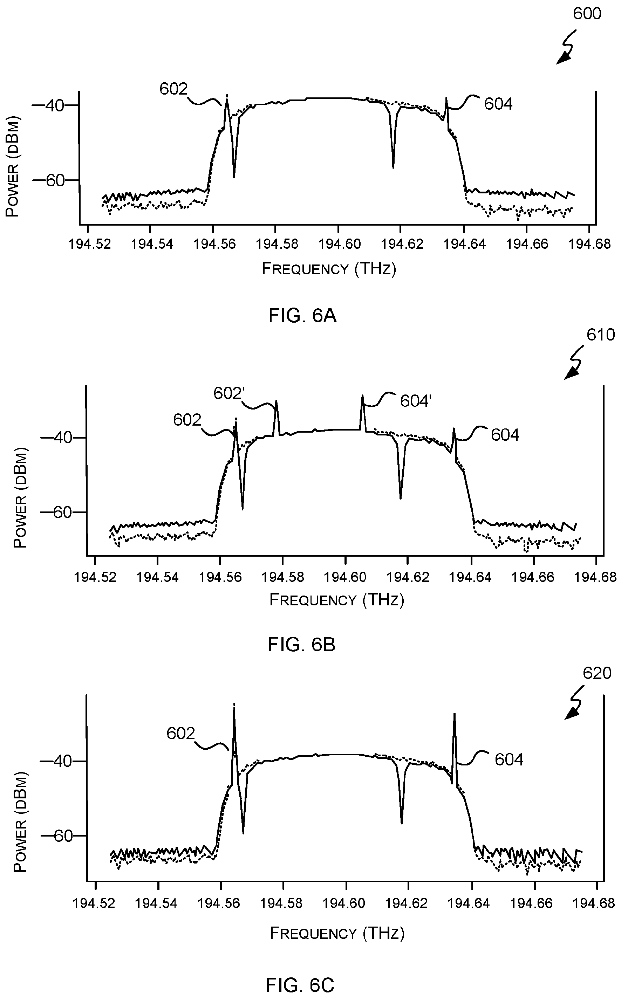

FIG. 6A illustrates such a signal comprising a pilot tone. Chart 600 shows an intensity (on a logarithmic scale, in dBm) of a signal spectrum over a single channel covering frequencies from approximately 194.56 THz to 194.64 THz, i.e. the channel having a bandwidth of approximately 80 GHz. The dotted line corresponds to a signal transmitted by a transmitter such as transmitter 112 of FIG. 1B, and the solid line represents a signal received by a receiver such as receiver 114 of FIG. 1B. The signal is transmitted via a HCF, as described with respect to FIG. 1B, wherein the HCF comprises a gas which has a GLA frequency within the frequency range of the channel.

There are two pilot tones 602 and 604 comprised in the signal illustrated in chart 600. The pilot tones 602, 604 may be affected by GLA. Especially, pilot tone 602, which is proximate to a GLA frequency, is affected by the GLA and the pilot tone profile of the pilot tone 602 is attenuated by the GLA. This attenuation can impact a side-operation that uses the pilot tone 602. Though pilot tone 604 is further from a GLA frequency than pilot tone 602, in some cases pilot tone 604 is also affected by GLA. In other cases, pilot tone 604 is not affected by GLA.

To reduce the impact of GLA on the signal comprising a pilot tone 602, 604, numerous techniques are employed.

FIG. 6B is a chart 610 illustrating the same signal as illustrated in FIG. 6B, but where the signal comprises additional pilot tones 602', 604'. Pilot tones 602' and 604' are duplicate tones of pilot tones 602 and 604 respectively, but are located at different central tone frequencies. This provides a redundancy, where, in a case wherein a pilot tone 602 is used for a side-operation and is proximate for example to a GLA frequency and is therefore attenuated by GLA, a receiver is able to use a duplicate pilot tone 602' for the side-operation instead of using the pilot tone 602. Because the pilot tone 602' is located at a different frequency to pilot tone 602, there is an additional chance for the side-operation to use a pilot tone which is not attenuated or is not attenuated as much by GLA as the original pilot tone.

A receiver may be configured to use a duplicate pilot tone 602', 604' by configuring the receiver to search for the duplicate pilot tone in response to the pilot tone 602, 604 being proximate to a known GLA frequency.

Though a single duplicate pilot tone 602', 604' for each pilot tone 602, 604 is illustrated, in various examples two, three, four or any other number of duplicate pilot tones, each with different central tone frequencies, are comprised in a signal, and one or more of the tones comprised in the signal have duplicate tones also included in the signal.

To include a pilot tone in a signal, a frequency and/or amplitude of the signal is adjusted, in the electrical or digital domain, to define a signal component corresponding to the pilot tone. For example, an existing frequency component of the signal is amplified and/or a new frequency component is added to the signal with an amplitude corresponding to the pilot tone to be added to the signal. In some cases, the included pilot tone is a digital pilot tone.

To provide a fallback pilot tone that will further be less affected by GLA than an original pilot tone, a duplicate pilot tone with same properties as an original pilot tone comprised in a signal but with a different central tone frequency is also comprised in the signal. The different central tone frequency of the duplicate pilot tone is spaced from the central tone frequency of the original pilot tone by a frequency difference which does not correspond to a frequency difference between any two GLA frequencies within the frequency range of the signal. In this way, duplicate pilot tones will never have central tone frequencies which are equivalent to a GLA frequency when an original pilot tone has a central tone frequency equivalent to a GLA frequency. A fallback pilot tone in a case wherein an original pilot tone has a central tone frequency equivalent to a GLA frequency is therefore provided.

Additionally or alternatively, an amplitude of an original pilot tone proximate to a GLA frequency is increased, such that the impact of GLA at the GLA frequency (which attenuates the pilot tone) is reduced because a receiver receives an amplified pilot tone (even if the amplitude is reduced by the GLA) relative to if the original pilot tone was not amplified. In some cases, amplification of a pilot tone is performed using a narrow-band amplification method as described above, such as by adjusting an amplification gain profile (at a receiver and/or at a transmitter) to correspond with a profile of the pilot tone.

FIG. 6C is a chart 620 which is the same as chart 600 but wherein the amplitude of the two pilot tones 602 and 604 is increased, to reduce an impact of GLA on the signal comprising the pilot tones 602, 604.

Additionally or alternatively to increasing an amplitude of a pilot tone, a central tone frequency of a pilot tone proximate to a GLA frequency is changed so as to move the central tone frequency further from the GLA frequency, providing another way to reduce an impact of GLA on the signal comprising the pilot tone.

The impact of gas line absorption on a signal and various strategies to mitigate the impacts of the gas line absorption have been described thus far. Additionally or alternatively to gas line absorption, intermodal interference (IMI) affects a signal which is transmitted via a HCF. In particular, a HCF may be configured to support two fundamental polarization modes of light transmitted via the HCF. As an inherent property of HCFs, and also as a consequence of point defects, splices, and variations in microstructure of the HCFs, higher order modes (relative to the two fundamental polarization modes) may be introduced or excited during transmission of an electromagnetic wave via a HCF.

These higher order modes, once excited, may subsequently couple their energies back into the fundamental modes during a recombination. During transmission of a signal via the HCF, however, the different modes of light transmitted via a HCF have different propagation constants, and intermodal interference may occur between the various modes in existence. Intermodal interference causes effects reflecting a distortion in a time domain and a fading channel in a frequency domain of a signal, and causes noise or other variations in the signal.

Especially, as hollow core fibers are deployed at greater distances of hundreds of kilometers and even greater, IMI causes significant degradation of signal quality and can result in errors and thus lower accuracy of demodulation at a receiver. These impacts therefore limit the distances at which HCF is able to be deployed.

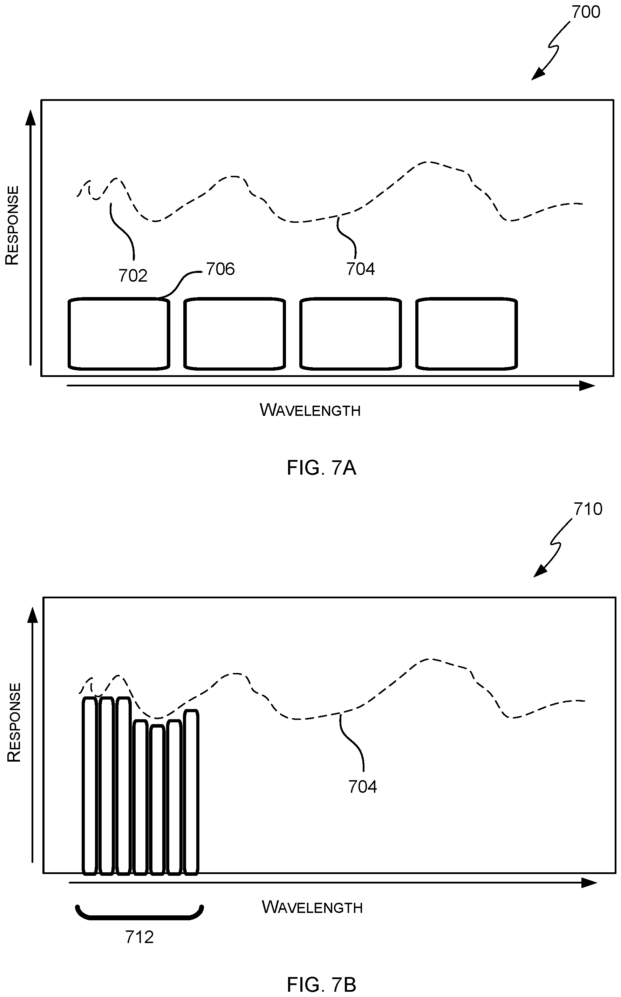

FIG. 7A is a chart 700 illustrating an impact of intermodal interference on a channel response, in this case being an absolute channel response. The channel response refers to a signal response for a signal component associated with (i.e. which is modulated within) the channel. As such, a channel response may be defined at multiple points within a boundary of a channel, each point for example being a possible modulation state of a signal component associated with the channel. Channels 706 represent channels of a signal for transmission via a HCF, with typical bandwidths of the order of gigahertz in frequency. Line 702 represents a signal response across wavelengths associated with the channels 706 assuming no IMI effects. Dotted line 704, however, represents the signal response across the same wavelengths in the presence of IMI effects. Within the boundaries of each channel 706, the lines 702 and 704 represent a channel response. Though chart 700 is purely exemplary, it shows that a single channel 706 of a signal transmitted via a HCF experiences a differential response, in some cases in terms of magnitude and/or phase, over the channel bandwidth in the presence of IMI, and this may reduce the accuracy of demodulation of the signal at a receiver. In particular, the non-uniform signal response across the channel (i.e. the non-uniform channel response) means that signal processing is applied differently for different states of a signal component of the channel. This means that recovering the true state of the signal component at a receiver, i.e. the state which accurately reflects the data used to modulate the signal component at a transmitter, is more challenging, and that errors may be introduced at the receiver which result in incorrect data being recovered.

To reduce the impact of IMI on the signal (and therefore improve an accuracy of demodulation of the signal at a receiver), a lower-bandwidth channel, relative to the channel 706, may be implemented. In various examples, a plurality of lower-bandwidth channels, relative to the channel 706, are implemented.

FIG. 7B is a chart 710 showing the implementation of such a lower-bandwidth channel. Line 704 represents the response of a signal over the same wavelengths as depicted in FIG. 7A. A plurality of channels 712, each with a lower bandwidth compared to the channel 706 of FIG. 7A, are implemented. The lower bandwidth channels 712 result in less of a differential response across each lower bandwidth channel compared to the differential response across the channel 706 of FIG. 7A. As a result, each channel is impacted less by IMI than in the implementation of FIG. 7A.

Though a plurality of lower bandwidth channels 712 is shown in chart 710, it should be appreciated that any number of lower bandwidth channels, such as one, two, five, ten, or more, are in some cases implemented. Additionally, the lower bandwidth channels 712 may be implemented such that they are within a boundary (such as a frequency bandwidth) defined by a higher bandwidth channel e.g. channel 706 of FIG. 7A, or such that they extend beyond the boundary of the higher bandwidth channel. Moreover, the lower bandwidth channels 712 may be implemented at least in part by adjusting an existing channel of a signal, and may also be implemented at least in part by introducing a new channel of the signal.

In some cases, a lower bandwidth channel of the lower bandwidth channels 712 is implemented by adjusting a frequency of a channel of a signal for transmission via a HCF, as described herein in relation to adjusting a frequency of a channel to mitigate an impact of GLA, so as to reduce a bandwidth of the channel. In other cases, the lower bandwidth channel is implemented by generating a channel with the lower bandwidth, such as by digitally carving a signal, by configuring a transmitter to modulate a signal component within boundaries defining the lower bandwidth channel, or by any other generation or adjustment method.

In various examples, the lower bandwidth channel has a bandwidth such that a signal response across the channel is substantially or totally flat, or otherwise such that an impact of IMI on the signal response across the channel is negligible. The impact of IMI on the signal response across the channel being negligible may refer to an accuracy of demodulation of the signal component of the channel not being reduced by IMI as much as the accuracy is reduced by another factor. The impact of IMI on the signal response across the channel being negligible may alternatively refer to an accuracy of demodulation of the signal component of the channel not being substantially influenced by IMI.

An accuracy of demodulation of the signal component refers to an accuracy of the data obtained by demodulating the signal component, wherein the true value of the data is the data used to modulate the signal component at a transmitter. An impact of IMI on the signal response across the channel refers to the impact of IMI on a signal response associated with a signal component of the channel, within the boundaries defining the channel.

The signal response associated with the signal component refers to a difference in a signal property such as an amplitude or a phase of the signal component which is received at a receiver, compared to the same signal property of the signal component which is transmitted at a transmitter. For example, a constant amplitude signal component which is modulated within a channel defined by a frequency range is in some cases transmitted with the constant amplitude and varying frequencies (for example a first frequency and a second frequency) by a transmitter.

The signal component is then transmitted via a HCF and received at a receiver. At the receiver, the signal component may have a varying amplitude, due at least in part to IMI during transmission via the HCF, alongside a varying frequency (the first and the second frequency). Though a varying amplitude due to IMI is described, it should be appreciated that additionally or alternatively a phase of the signal (e.g. of a signal component) varies at least in part due to IMI. The degree of difference between the amplitude and phase of the signal component at the receiver and the amplitude and phase of the signal component at the transmitter, for the first frequency, defines a signal response at the first frequency. The degree of difference between the amplitude and phase of the signal component at the receiver and the amplitude and phase of the signal component at the transmitter, for the second frequency, defines a signal response at the second frequency. It should be appreciated that a response may be defined at any frequency or any other, in some cases varying, signal property at a transmitter. Where there is a varying response across the frequencies of the channel of the signal component (i.e. across the first and second frequencies in this example), the accuracy of demodulating the signal component at the receiver is reduced.

The impact of IMI on the signal therefore presents as a varying signal response across a channel of the signal (i.e. a varying channel response across the channel), where a higher amount of response variation within the boundaries of the channel results in a less accurate demodulation compared to a lower amount of response variation. Reducing the amount of response variation within the boundaries of the channel therefore improves an accuracy of demodulation of the signal at a receiver.

In some cases, the lower bandwidth channel has a bandwidth of less than or equal to one kilohertz. In this case, the impact of IMI on the signal is negligible.

Additionally, though IMI has been described thus far, the different polarization modes of light transmitted via a HCF may result in polarization mode dispersion (PMD) of the signal comprising the different polarization modes. Though minor dispersions and distortions may be compensated for by using a specifically designed circuit such as an Application-Specific Integrated Circuit (ASIC) at a receiver, at large HCF lengths of for example greater than 100 kilometers (or greater than 400 or 600 kilometers), the size and power consumption of the required ASIC to compensate for the degree of PMD at such scales presents a significant practical challenge.

By implementing a lower bandwidth channel in a signal for transmission via a HCF as described, a pulse width of a signal component associated with the lower bandwidth channel is larger. Consequently, the effect of PMD on the signal component is reduced. Therefore, the implementation of a lower bandwidth channel in a signal for transmission via a HCF reduces an impact of both IMI and PMD on the signal. This facilitates more accurate demodulation at a receiver and/or transmission over longer distances, compared to implementing channels with larger bandwidths.

The lower bandwidth channel may therefore have a bandwidth such that, in addition to or alternatively to an impact of IMI on a signal response across the channel being negligible, an impact of PMD on the channel is negligible. In various examples, the impact of PMD on the channel being negligible refers to an accuracy of demodulation of the signal component of the channel not being reduced by PMD as much as the accuracy is reduced by another factor. Alternatively, the impact of PMD on the channel being negligible may refer to an accuracy of demodulation of the signal component of the channel not being substantially influenced by PMD.

The described implementation of a lower bandwidth channel may be performed independently of the herein described techniques for mitigating GLA, or alongside such techniques. In particular, when adjusting a frequency of a channel proximate to a GLA frequency so as to reduce an impact of GLA on a signal comprising the channel, or when otherwise adjusting a signal property to mitigate GLA, the bandwidth of a channel (such as a channel which is adjusted to mitigate GLA) may also be reduced so as to reduce an impact of at least one of IMI and PMD on the signal. The reduction of the bandwidth may be a reduction to a bandwidth of less than or equal to one kilohertz, and/or to a bandwidth such that a signal response due to IMI is substantially flat across the channel.

Adjustments and strategies relating to changing properties of a channel of a signal have been described herein, which reduce impacts of GLA, IMI, and PMD on the signal and therefore improve an accuracy of demodulation. One such described adjustment is an adjustment to a spacing between channels such that the spacing is located at a frequency corresponding to a GLA frequency. In addition to or alternatively to such an adjustment to the spacing between channels, at least two channels of a signal may overlap. The at least two channels which overlap may not be proximate to a GLA frequency.

Implementing overlapping channels of a signal increases a data transfer rate for transmission via a HCF whilst maintaining limited signal resources such as bandwidth. Overlapping channels refers to channels which overlap at least partially and at least in one dimension, and in various examples are enabled by the overlapping channels having orthogonal states in at least one other dimension.

For example, a signal component of a first channel may be orthogonal to a signal component of a second channel in either frequency or time, wherein the signal components of the first and second channels are comprised in a combined signal for transmission. The first and second channel may therefore overlap at least partially in a first one of frequency or time, whilst being orthogonal in a different one of frequency or time. Because the first and second channel are orthogonal in at least one dimension, a receiver may be designed to separate the overlapping first and second channel from the combined signal by analyzing the signal in the dimension in which the first and second channels are orthogonal.

The receiver may be designed to process the overlapping channels by the receiver being configured to process the combined signal in the digital domain using an analyzer filter. For example, the receiver may use an analyzer filter to filter signal components associated with overlapping channels in the digital domain, in a dimension in which the signal components are orthogonal to each other. The receiver may also incorporate interference cancellation techniques to counter inference between the overlapping channels. Overlapping channels may be implemented at a transmitter by the transmitter being configured to use a synthesizer filter to generate a combined signal comprising at least two overlapping signal components, each associated with a respective channel.

Though overlapping channels may be incorporated independently of any signal design to reduce GLA, IMI and/or PMD, in various examples at least two overlapping channels are implemented alongside the herein described techniques to reduce the impact of GLA, IMI and/or PMD. In particular, interference cancellation techniques performed by a receiver designed to process the overlapping channels also act (in addition to increasing a data transfer rate) to relieve IMI, PMD and other distortion effects, and therefore further improve an accuracy of demodulation of a signal.

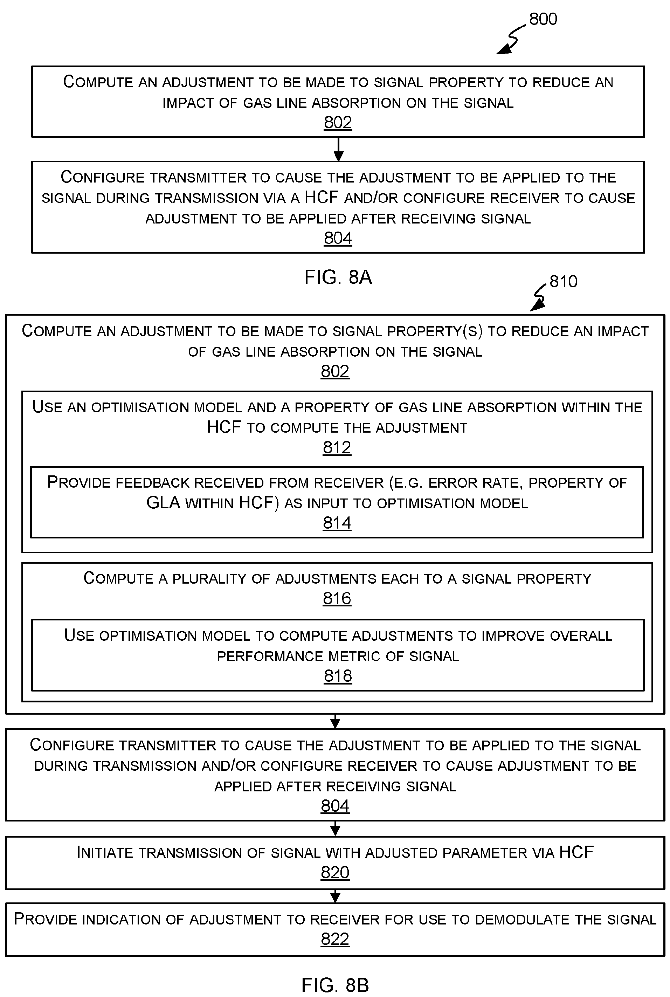

Numerous techniques for reducing an impact of GLA, IMI and/or PMD on a signal for transmission, by a transmitter, via a HCF, have been disclosed herein. To determine an adjustment to be made to a property of a signal, the method 800 of FIG. 8A is used.

Method 800 comprises computing an adjustment to be made to a property of a signal to reduce an impact of GLA on the signal 802. Method 800 further comprises configuring a transmitter to cause the adjustment to be applied to the signal during transmission 804 via a HCF. Computing the adjustment to be made 802 is performed using the techniques described above.

FIG. 8B is a flow diagram of an example method 810 which expands upon the method 800 of FIG. 8A. It should be appreciated that method 810 is exemplary and that in some cases one or more of the blocks described below are implemented as part of or in addition to the method 800.

Method 810 comprises computing an adjustment to be made to a signal property (or properties) to reduce an impact of GLA on the signal 802. Computing the adjustment to be made 802 is performed (as illustrated by block 812) using an optimization model and a property indicating GLA (i.e. an indication of a property of GLA) within the HCF via which the signal having a property adjusted is to be transmitted.

Using an optimization model refers to providing an input to a model which provides as an output an adjustment to be made to a property of the signal. In some cases, properties of the signal (prior to implementing the adjustment), such as a frequency, amplitude, number of signal components, modulation scheme, and/or other properties, are provided as input to the optimization model.

The property indicating GLA within the HCF via which the signal to have a property adjusted is to be transmitted refers to a property affecting an impact of GLA within the HCF on the signal. Examples of the property indicating GLA include a GLA frequency, a GLA profile, a volume of gas present within the HCF, a species of gas present within the HCF, a density of gas present within the HCF, and/or a length of the HCF. In some cases, GLA frequencies are known and are accessible by the optimization model. In some further cases, GLA profiles are computed using a known GLA frequency in combination with an indication of a magnitude of GLA at the GLA frequency, which can be determined for example by multiplying a density of gas corresponding to the GLA with a volume of the HCF, computed for example by multiplying a cross-sectional area of the HCF with a length of the HCF.

Measurements of the HCF can be taken to determine the above-mentioned properties, or a property of the HCF can be predefined for example as an average value indicative of GLA typically encountered in HCFs.

Alternatively, the property indicating GLA can be determined using spectral analysis methods, such as by transmitting a reference signal via the HCF, receiving the signal, and computing a difference between the transmitted and the received signal. This enables a GLA profile to be empirically determined.

The property indicating GLA within the HCF, and the measurements associated with the property where used, are in some cases performed once, upon initialization of an optical communication system comprising the HCF. Initialization may be performed after laying the HCF and/or connecting a transmitter and/or a receiver via the HCF. This is because GLA within a HCF does not vary, during normal use over time, to a high enough degree to impact the adjustments described herein in terms of their reduction of the impact of GLA on a transmitted signal.

In some cases, a significant change in the HCF or in hardware associated with the optical communication system comprising the HCF, for example in response to a breaking of the HCF, results in new adjustment computations being performed. For example, the property indicating GLA within the HCF may be re-computed or re-measured in response to a change in the optical communications system comprising the HCF which is above a threshold degree of change, and/or which meets a change condition.

As such, the optimization model is used to compute the adjustment to be made once, and is then in various examples used to configure a transmitter to cause the adjustment to be applied, without further computing additional adjustments. In some cases, the optimization model is used to compute the adjustment to be made over a single time period, for example where a preliminary adjustment is computed (and caused to be applied to a transmitted signal via the HCF) and then feedback is obtained from a receiver and provided as input to the optimization model to compute a further adjustment to refine the signal and further reduce the impact of GLA on the signal. After the single time period has elapsed, an adjustment to be made to the signal is in some cases no longer computed. The single time period is for example one hour, two hours, or another time period which is shorter than a time period during which a signal is to be transmittable via the HCF during active use, such as over a lifetime of the HCF.

The method 810 is therefore applicable to compute an adjustment to be made to a signal property of a first signal for transmission via a first HCF, and then to compute an adjustment to be made to a signal property of a second signal for transmission via a second HCF. This is enabled, for example, by the method 810 being performed by an entity which is independent of an optical communication system comprising the first HCF and an optical communication system comprising the second HCF.

As mentioned above, a property indicating GLA within the HCF is in some cases computed or received from a receiver which receives a signal transmitted via a HCF. Block 812 therefore optionally comprises block 814. Block 814 comprises providing feedback received from a receiver as input to the optimization model of block 812. Examples of feedback include an indication of a property indicating GLA within the HCF associated with the received signal, and/or an indication of an error.

An indication of an error in this context refers to an indication of a difference between a data element used to modulate a signal for transmission (e.g. such that the data element is encoded in the modulated signal), and a data element which is demodulated from the received modulated signal. Such an indication of an error is for example a bit error rate, a demodulated data element (e.g. a bit obtained by demodulating the received modulated signal), a difference between a demodulated data element and a data element used to modulate a signal for transmission (which is then received as the received signal), an error vector magnitude and/or any other indication of an error, performance metric, or performance monitoring figure.

Additionally, method 810 comprises computing a plurality of adjustments each to a property of the signal 816. For example, as mentioned above, an adjustment to increase an amplitude of a first channel of the signal (i.e. to increase an amplitude of a signal component within the first channel) is in some cases accompanied by an adjustment to decrease an amplitude of a second channel. In some cases, an adjustment to change a modulation format of a channel of the signal is accompanied by an adjustment to a narrow-band amplification of a narrow-band region of the signal corresponding to a pilot tone proximate to a GLA frequency. It should be appreciated that any number of adjustments, as described herein, are in various examples caused to be applied to a signal in combination with each other.

Additionally, in some cases the plurality of adjustments each to a property of the signal 816 comprises an adjustment to reduce an impact of IMI and/or PMD on the signal, alongside an adjustment to reduce an impact of GLA on the signal. For example, a same adjustment such as to reduce a bandwidth of a channel of the signal and therefore reduce an overlap with a GLA frequency associated with a HCF also reduces an impact of IMI and PMD due to the smaller bandwidth. Alternatively, an adjustment to a central frequency of a channel of a signal so as to move the channel away from a proximate GLA frequency may be accompanied by an adjustment to a channel to reduce its bandwidth and thereby reduce an impact of IMI and PMD on the signal. It should be appreciated that any number of adjustments to reduce an impact of IMI and/or PMD, as described herein, may be computed and caused to be applied to a signal, either as part of the same adjustment to mitigate GLA or independent of an adjustment to mitigate GLA.

Block 816 comprises block 818, which comprises using the optimization model of block 812 to compute the plurality of adjustments such that an overall performance metric of the signal is improved. For example, whilst an adjustment to a power allocation of a first channel of the signal which is close to a GLA frequency, the adjustment to amplify the first channel, will reduce an impact of GLA at the GLA frequency on the first channel, this may have an associated tradeoff since a second channel cannot be amplified or may need to be reduced in amplitude, due to a limited power for allocation to channels at a transmitter. As such, an overall performance metric of the signal may actually be reduced, or may not be improved as much as possible, by focusing only on an adjustment to a channel close to a GLA frequency.

By using the optimization model to compute adjustments to be made to improve an overall performance metric of a signal, an impact of GLA across a wider portion of the spectrum of the signal is enabled to be reduced compared to if a plurality of adjustments were independently computed.

The overall performance metric of the signal as described herein refers to an indication of an ability of the signal to perform its function, e.g. for a modulated signal component to encode a data element and be accurately decoded, and for a pilot tone to be used to accurately perform a side-operation. Examples of an overall performance metric of the signal comprise a bit error rate over the spectrum of the signal, an overall data rate of the signal (i.e. how much data is encoded per time period by the signal), an average difference between a demodulated data element and a data element used to modulate a signal for transmission (which is then received as the received signal) over the spectrum of the signal, and/or an error vector magnitude over the spectrum of the signal.

Once an adjustment to a property of the signal to be transmitted via a HCF is computed, a transmitter is configured to cause the adjustment to be applied to the signal during transmission of the signal 804 via the HCF. Configuring the transmitter may involve causing an indication of the adjustment to be made to be provided to a component of the transmitter which generates an electromagnetic wave which is then modulated to produce the signal to be transmitted, or may involve causing an indication of the adjustment to be made to be provided to a component of the transmitter which modulates the generated electromagnetic wave, combines a generated electromagnetic wave with an additional signal component (such as a pilot tone), and/or amplifies or otherwise affects a property of the signal that is transmitted.

Transmission of the signal with the adjusted one or more properties, via a HCF, is then initiated 820. A signal which will be less impacted by GLA is therefore transmitted via the HCF.

In some cases, where the signal is to be transmitted and subsequently received by a receiver, an indication of the adjustment to be made to the property of the signal is provided to a receiver 822 for use by the receiver to demodulate the signal. For example, the receiver may be provided with an indication of a channel bandwidth or a number of channels in the adjusted signal, which enables the receiver to demodulate the signal components within the channel. In other cases, such as where a pilot tone is amplified, a receiver is not provided with an indication of the adjustment to amplify the pilot tone, because the receiver is able to locate and utilize the pilot tone as expected prior to the adjustment being made.

The optimization model of block 812 will now be elaborated upon. The optimization model is in some cases comprises a rule, a lookup table, and/or a machine-learning model.

In cases wherein the model comprises a rule, the rule is defined to map an input property of the signal to be adjusted and to be transmitted via a HCF and/or an input property indicating GLA within the HCF, to the adjustment to be made to a property of the signal to reduce an impact of GLA on the signal.

In cases wherein the model comprises a lookup table, the lookup table is constructed to map an input property of the signal to be adjusted and to be transmitted via a HCF and/or an input property indicating GLA within the HCF, to the adjustment to be made to a property of the signal to reduce an impact of GLA on the signal.

In cases wherein the model comprises a machine-learning model, the machine-learning model is trained, such as using supervised training, to receive an input property of the signal to be adjusted and to be transmitted via a HCF and/or an input property indicating GLA within the HCF, and to output a computed adjustment to be made to a property of the signal to reduce an impact of GLA on the signal.

Where an input property of the signal to be adjusted and to be transmitted via a HCF and/or an input property indicating GLA within the HCF are mentioned above, in various examples the model is configured to access these inputs or is configured to be provided with these inputs. In some cases, an input property of the signal to be adjusted and/or an input property indicating GLA within the HCF, is determined empirically, such as by performing a measurement of the HCF or of gas located interior to the HCF, or by measuring a signal produced by a transmitter prior to transmitting the signal. In other cases, the input property of the signal to be adjusted and/or the input property indicating GLA within the HCF are defined non-empirically, such as by defining default values, receiving values input by a user, or by defining the input properties based on a characteristic of the transmitter and/or the HCF. For example, the input properties may be defined by a signal configured to be generated by a transmitter by default or with a certain configuration prior to applying the adjustment determined by the optimization model, and/or an average gas concentration within a type of the HCF.

The model is constructed to map an input property of the signal to be adjusted and to be transmitted via a HCF and/or an input property indicating GLA within the HCF, to the adjustment to be made to a property of the signal to reduce an impact of GLA on the signal. The model is therefore in various examples constructed by receiving a plurality of input properties of the signal to be adjusted and to be transmitted via a HCF and/or input properties of GLA within the HCF. Additionally, adjustments to a property of the signal, associated with the received input properties, that reduce an impact of GLA on the signal, are also received.

The plurality of input properties and associated adjustments are for example obtained by varying properties of a signal to be adjusted and to be transmitted via a HCF in a test optical communication system and/or by varying properties of GLA within the HCF, and recording the varying properties. The associated adjustments are for example obtained by testing adjustments to one or more properties of the signal for each of the varying input properties, and analyzing an indication of the impact of GLA on the signal to record associated adjustments to a property of the signal that reduce an impact of GLA on the signal. In some cases, a plurality of varying input properties are associated with a single associated adjustment, i.e. a plurality of properties of a signal to be adjusted and to be transmitted via a HCF in a test optical communication system and/or properties of GLA within the HCF are varied, and a single adjustment to a property of the signal that reduces an impact of GLA on the signal is recorded. In various examples, a single adjustment comprises an adjustment to a plurality of properties of a signal.

The recorded input properties and associated adjustments are then received, and used to construct the model.

In cases wherein the model comprises a machine learning model, the associated adjustments are in some cases treated as ground truth adjustments, and the received input properties are treated as training inputs, wherein the machine learning model is trained, via supervised training, to minimize a loss between an output adjustment in response to provided input properties and a corresponding (to the provided input properties) ground truth adjustment.

Alternatively, in addition to an associated adjustment with received input properties being received, an indication of a magnitude of a reduction of the impact of GLA on the signal due to the associated adjustment is also received. The indication of the magnitude of the reduction of the impact of GLA is then used to train the machine learning model as the ground truth value, and the associated adjustment is provided as a training input alongside the received input properties. In this way, the machine learning model is trained in a supervised way to compute an indication of the magnitude of the reduction of the impact of GLA in response to the model being provided with input properties and associated adjustments. The machine learning model can then be provided with the input properties, and used to compute an indication of the magnitude of the reduction of the impact of GLA in response to varying adjustments. An adjustment may therefore be computed, during use of the model, which maximizes the magnitude of the reduction of the impact of GLA indicated by the indication of the magnitude of the reduction of the impact of GLA, by any maximization method, such as by using a gradient-based optimization method, a random search method, Bayesian optimization, or by using any other maximization method.

Illustratively, the model in one example comprises a plurality of rules, being:
Rule 1: If a gas line profile has a magnitude greater than 10 dB at a gas line absorption frequency within a signal channel, go to rule 2. If not go to Rule 3.
Rule 2: If a gas line frequency is closer to a pilot tone frequency than 0.01 THz, adjust signal by increasing a narrow-band amplification of a region of the signal corresponding to the pilot tone and by increasing amplification of the signal channel.
Rule 3: If a gas line profile has a magnitude greater than 5 dB at a gas line absorption frequency within a first signal channel, compare gas line profile magnitudes at gas line absorption frequencies within all signal channels. If gas line profile within first signal channel has highest peak magnitude, amplify the first signal channel. If gas line profile within a different signal channel has a higher peak magnitude than the gas line profile within the first signal channel, amplify the different signal channel.

In use, properties of a signal to be adjusted and to be transmitted via a HCF in an optical communication system, being channel central frequencies and bandwidths, and pilot tone frequencies, and properties of GLA within the HCF, being GLA profiles and associated frequencies, are received. The received properties are then processed using the model to map the received properties to an adjustment to be made to a property of the signal, for example being the amplification of a signal channel as mentioned above.

Similarly, during use of a lookup table, the received properties are searched for in the lookup table and an associated adjustment to a property of the signal is retrieved.

An adjustment to a property of the signal to be transmitted via a HCF which reduces an impact of GLA on the signal and is specific to an optical communication system which is configured to use the signal is therefore enabled.

By taking into account properties of the GLA within the HCF specific to the HCF (e.g. a length of the HCF or a GLA profile determined empirically from the HCF), the method of computing an adjustment to reduce an impact of GLA on the signal is adaptive to a specific HCF. For example, when performed using a property indicating GLA within a first HCF, a first adjustment to reduce an impact of GLA on a signal to be transmitted via the first HCF is computed. However, when performed using a property indicating GLA within a second HCF, a second adjustment to reduce an impact of GLA on a signal to be transmitted via the second HCF is computed. As mentioned above, the adjustment can be computed once or over a single time period and then permanently applied to each HCF.

It should be noted, however, that the method of computing an adjustment to reduce an impact of GLA on the signal is capable of being performed without using a property indicating GLA within the HCF that is specific to the HCF. For example, an average GLA profile over a plurality of HCFs can be used to compute the adjustment, in which case the method is not adaptive to the specific HCF but is still enabled to compute the adjustment.

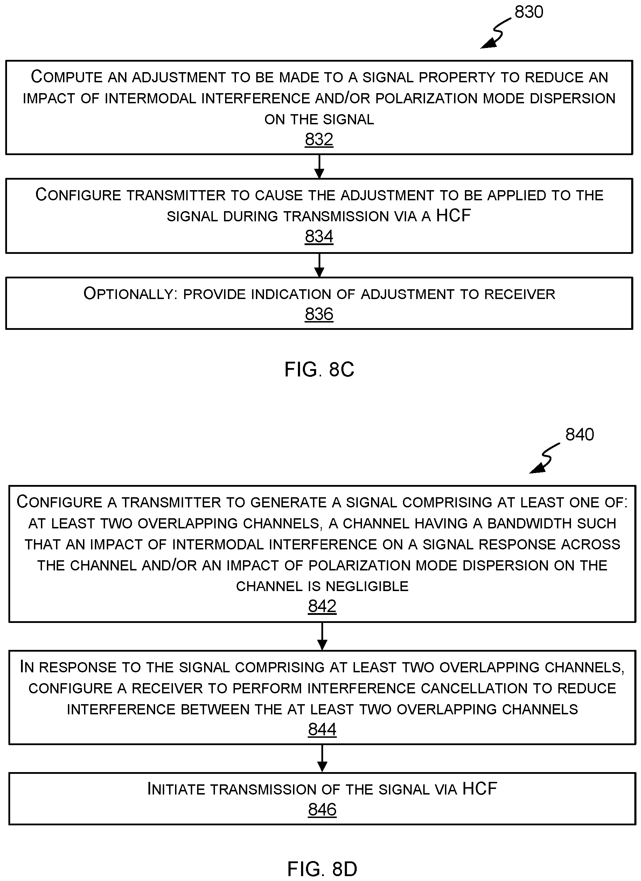

Though methods incorporating both GLA mitigation and in some cases IMI and/or PMD mitigation have been described thus far, FIG. 8C illustrates a method 830 for mitigating an impact of IMI and/or PMD on a signal for transmission via a HCF independently of mitigating an impact of GLA on the signal.

Method 830 comprises computing an adjustment to be made to a signal property to reduce an impact of intermodal interference and/or polarization mode dispersion on the signal 832. Computing the adjustment may comprise computing an adjustment to a channel property, such as a bandwidth, of the signal such that an impact of IMI on a signal response across the channel (such as a channel response across the channel) is negligible (and in some cases such that a bandwidth is reduced but not reduced substantially further than the bandwidth at which the impact of IMI is negligible) or is reduced relative to a pre-adjustment state of the channel. Additionally or alternatively, computing the adjustment may comprise computing an adjustment to a channel property, such as a bandwidth, of the signal such that an impact of PMD on a signal component associated with the channel is negligible (and in some cases such that a bandwidth is reduced but is not reduced substantially further than the bandwidth at which the impact of PMD is negligible) or is reduced relative to a pre-adjustment state of the channel. Additionally or alternatively, computing the adjustment may comprise computing an adjustment to a signal property, such as a number of channels or a channel property such as a central frequency or a bandwidth of a channel, so as to cause at least two channels of the signal to overlap.

Computing the adjustment in some cases comprises computing an adjustment to one or more signal properties.

Method 830 further comprises configuring a transmitter to cause the adjustment to be applied to the signal during transmission via a HCF 834. In some cases, method 830 also comprises providing an indication of the computed adjustment to a receiver which is configured to receive the signal transmitted via the HCF. The receiver may be configured to process the received signal by taking into account the computed adjustment.

In some cases, such as wherein the computed adjustment causes at least two channels to overlap, the receiver is configured to perform interference cancellation to reduce an interference between the at least two overlapping channels, for example by using a digital filter which is configured to take into account the computed adjustment.

Though an adjustment to reduce an impact of IMI and/or PMD on a signal may be computed and applied during transmission, in other cases a signal having properties which mitigate IMI and/or PMD is generated. FIG. 8D shows a method 840 of such a generation.

Method 840 comprises configuring a transmitter to generate a signal comprising at least one of: at least two overlapping channels, and a channel having a bandwidth such that an impact of IMI on a signal response across the channel, and/or an impact of PMD on the channel, is negligible 842. The impact of IMI and/or PMD on the channel refers to the impact on a signal component of the channel during transmission via a HCF from the transmitter to a receiver. In response to the signal comprising at least two overlapping channels, the receiver is configured to perform interference cancellation to reduce interference between the at least two overlapping channels 844, for example by using a digital filter. The receiver is configured to receive a signal transmitted via the HCF by the transmitter.

Method 840 also comprises initiating transmission of the signal via the HCF 846.

The methods and techniques described thus far are performed by a computing system. FIG. 9A is a schematic diagram of an optical communication system 900 similar to that illustrated in FIG. 1A, but where the system 900 comprises an apparatus 902 for mitigating gas line absorption, IMI, and/or PMD. Apparatus 902 is configured to perform the methods described herein.

Apparatus 902 is independent of transmitter 112 and of receiver 114, which enables the apparatus 902 to be used to compute an adjustment to reduce an impact of GLA, IMI, and/or PMD on a signal transmitted by the transmitter 112 via the HCF 116, and subsequently to be used to compute an adjustment to reduce an impact of GLA, IMI, and/or PMD on a signal transmitted by a transmitter via a HCF of a different optical communication system to system 900.

Apparatus 902 is configured to communicate with transmitter 112 (via path 904) so as to be capable of configuring the transmitter 112 to cause a computed adjustment to be applied to a signal during transmission of the signal via the HCF 116. In some cases, apparatus 902 is further configured to communicate with receiver 114 (via path 906), so as to be capable of receiving feedback from the receiver 114, receiving a property indicating GLA within the HCF 116, and/or of providing an indication of a computed adjustment to the receiver 114.

Finally, in some cases, apparatus 902 is configured to communicate with the HCF 116 (via path 908), for example wherein the HCF 116 comprises a sensor used to communicate a property indicating GLA within the HCF 116 to the apparatus 902. In other cases, a sensor comprised in the HCF 116 is not used to communicate the property indicating GLA, because this may interrupt transmission of a signal via the HCF 116. Instead, the property indicating GLA within the HCF 116 is for example computed or measured by a receiver.

Though apparatus 902 is illustrated as being independent of transmitter 112 and receiver 114, in various examples, apparatus 902 is comprised in the transmitter 112 or the receiver 114. This facilitates easier access to adjust properties of the signal generated and transmitted by the transmitter 112, or facilitates easier access to receive feedback for example, from the receiver 114.

An adjustment to a property of a signal, as described herein, is performed and applied to a signal in various examples at different stages of methods performed by an optical communication system 900.

FIG. 9B is a schematic diagram of such stages, being stages of an optical signal processing method 910 implemented in an optical communication system such as that illustrated in FIG. 9A.

Method blocks encompassed by box 912 are performed at a receiver, such as receiver 114 of FIG. 9A, and method blocks encompassed by box 914 are performed at a transmitter, such as transmitter 112 of FIG. 9A. Though blocks of a receiver-based method are elaborated upon, it should be appreciated that similar blocks are performed at a transmitter in various examples, and that the demodulation process as will be discussed below is performed in reverse to modulate a signal at a transmitter.

Method 910 comprises receiving a modulated signal 916 transmitted by a transmitter.

In block 918, a 90-degree hybrid coupler is used to split the modulated signal, which in some cases comprises two components with orthogonal phases (such as where the signal comprises a channel with a quadrature-amplitude modulation format), into two separate modulated signal outputs.

In block 919, an optical to electrical converter such as an apparatus comprising a photodiode is used to perform optical-to-electrical conversion for each output of the hybrid coupler of block 918 to generate in-phase and quadrature components of an equivalent modulated electrical signal to the optical signal output by the hybrid coupler of block 918.

In block 920, the modulated signal outputs are processed by an analog-to-digital converter, to convert the modulated electrical signals to a sequence of samples, which represent the constellation points of a constellation associated with modulation of the signal at a transmitter.

In block 922, clock recovery and retiming operations are performed on the digital signals, which comprises recovering a clock timing used at the transmitter to modulate the signal and synchronizing the digital signals by adjusting the timing for the processed digital signals to align with the recovered clock timing.

In block 924, the synchronized signals are normalized and orthogonalized, which comprises standardizing the synchronized signals, equalizing the synchronized signals, and compensating for signal imbalances that are not time-related.

The normalized signals are then processed in block 926, which comprises filtering the normalized signals, including for example splitting each channel of the normalized signal into distinct signal components.

The filtered signals are then processed by block 928, which comprises performing carrier recovery, via frequency estimation. This refers to estimating a frequency offset of a carrier wave of the signal relative to a reference signal generated at the receiver. An adjustment to the reference signal is then performed to reduce, with the target of removing, the estimated offset, such that the carrier wave is recovered (i.e. such that the reference signal closely corresponds to the carrier wave). The carrier wave is removed from the signal by combining the reference signal and the received signal at the 90 degree hybrid coupler of block 918 and the optical to electrical converter of block 919 such that beating between the received signal and the reference signal provides the modulation representing the constellation points of the signal components of the signal. The beating therefore provides information about the signal components of the signal without being affected by the properties of the carrier wave.

The recovered signals are then processed by block 930, which comprises performing symbol estimation and error correction. This refers to mapping the recovered signals to a constellation point, and therefore determining data (e.g. bits) represented by the modulation of the transmitted signal 916. Error correction comprises, for example, performing forward error correction.

The data used to cause the signal 916 to be modulated is therefore recovered. Metrics are then generated in block 932, such as by generating an indication of an error rate between the recovered data and the original data used to cause the signal 916 to be modulated at the transmitter, and internal optimizations of the components of the receiver are performed in response to these metrics, for example parameters of the filters and clock recovery operations are adjusted.

Feedback is then generated in block 934, and sent to a transmitter. Such feedback is in various examples received and provided as input to an optimization model as described herein, as part of computing an adjustment to a signal property to reduce an impact of GLA on the signal, as illustrated in block 936. This comprises performing the methods and implementing the techniques described herein.

The signal with the computed adjustment applied is then transmitted in block 938, and a signal 916 is transmitted via a HCF to be received by a receiver.

The adjustments described herein can be implemented in a number of stages of the signal processing process 910. For example, an adjustment to increase an amplification of a signal is performed in an optical domain, prior to block 918. A semi-conductor optical amplifier, and/or a method of filtering a signal and amplifying before re-combining the filtered portions of the signal, can be used to amplify the signal in the optical domain.

Additionally or alternatively, an adjustment to increase an amplification of a signal is performed in an electrical (i.e. analog) domain, such as between blocks 918 and 920, by using an electrical amplifier such as a low-noise amplifier, and/or a transimpedance amplifier.

Additionally or alternatively, an adjustment to increase an amplification of a signal is performed in a digital domain, such as between blocks 928 and 930. Amplification in the digital domain can be performed using a digital signal amplifier, and/or a software-based amplifier.

Though amplification in domains of the receiver has been described, it should be appreciated that amplification in respective domains is in various examples performed at a transmitter in addition to or alternatively to amplification at a receiver. Amplification at a receiver can amplify noise in addition to a signal, whereas amplification, e.g. digital amplification, at a transmitter may not amplify noise but may instead increase a maximum signal power which may result in unexpected behavior of modulators at the transmitter.

As described, the adjustment to be made to the signal to reduce an impact of GLA on the signal to be transmitted via the HCF is therefore in various examples made by configuring a transmitter to cause the adjustment to be applied to the signal during transmission via the HCF, and/or by configuring a receiver to cause the adjustment to be applied to the signal after receiving the signal by the receiver.

Adjustments to a signal to reduce an impact of GLA on the signal have been described thus far. In various examples, an adjustment is additionally or alternatively made to a digital signal processing technique already present within an optical communication system such as one used to transmit a signal via a solid core fiber, such that an impact of GLA on a signal during transmission via a HCF is reduced. Using the adjusted digital signal processing technique comprises computing an adjustment to be made to a property of the signal to reduce an impact of GLA on the signal, and then configuring a component of a receiver to cause the adjustment to be applied, similarly to the methods described thus far. However, the adjusted signal processing techniques are in various examples self-controlling, meaning that an optimization model that is independent of the receiver is not required for configuring the adjustment to the signal performed using the adjusted digital signal processing technique, to be applied.

Adjusting a digital signal processing technique enables existing digital signal processing systems and techniques constructed for signal transmission via a solid-core fiber to be repurposed for optical communication systems comprising HCFs. FIG. 10 is a flow diagram illustrating a method 1000 in which examples of such adjustments to signal processing techniques are used to reduce an impact of GLA on a received signal 1002. Method 1000 is performed at a receiver which receives a signal 1002 transmitted via a HCF. Method 1000 is also performed in the digital domain of the receiver and a received signal, such as after block 920 and before block 928 of FIG. 9B.

Though the blocks of method 1000 are all performed in some exemplary cases, in various examples one or more of the blocks of method 1000 are not performed.

Method 1000 comprises receiving a digital signal 1002, which has been for example converted using an analog-to-digital converter of a receiver.

Method 1000 further comprises using 1004 a filter, to reduce an impact of GLA on the signal 1002. In various examples, a multi-in/multi-out filter, being a filter of a multi-in/multi-out (MI/MO) equalizer, and/or a chromatic dispersion compensation (CDC) filter, are used to reduce an impact of GLA on the signal 1002.

A MI/MO equalizer operates to process received digital signals with multiple components in order to compensate for distortions in the multiple components. For example, a MI/MO equalizer compensates for polarization mode dispersion (PMD), and is present for example in receivers configured to receive signals transmitted via a solid-core fiber. Additionally, a MI/MO equalizer is typically present in a receiver configured to receive a dual-polarized signal, or to receive multiple spatial modes of a signal.

A chromatic dispersion compensation (CDC) filter estimates and compensates for chromatic dispersion of a signal, which is caused because transmission of a signal via a solid-core fiber means that signal components with different frequencies and therefore wavelengths travel at slightly different speeds within the transmission medium of the solid-core fiber. Frequency components of the transmitted signal therefore undergo dispersion.

In a HCF, because the transmitted signal travels through a hollow core rather than through a transmission medium of a solid-core fiber, the HCF causes less chromatic dispersion of the transmitted signal. In some cases, the CDC filter can therefore be constructed and/or operated more simply, reducing a complexity of a receiver and a required power of the receiver to operate, relative to a CDC filter used in solid-core fiber systems. Because the size and the power of the hardware components (e.g. components located on a digital signal processing chip) used to enable the CDC filter for an optical communication system comprising a HCF are in some cases reduced, spatial and/or power resources may be reallocated. For example, a power and/or a size of hardware components used to enable a MI/MO filter may be increased, and/or a specific filter for compensating the impact of the GLA on the received signal may be constructed, in response to the CDC filter being simplified.

The CDC filter can, in addition or alternatively to being made simpler, be used for GLA compensation. This is because the GLA frequencies affecting a signal are fixed for a specific gas composition within a HCF, and are substantially static over the active lifetime of the HCF. Therefore, the CDC filter may be repurposed by, for example, during compensating for a phase shift due to dispersion, configuring the CDC filter to compensate for an amplitude loss due to GLA. For example, a CDC filter may be configured to convert a digital signal 1002 into a frequency domain using a Fourier transform, and then to amplify frequency components affected by GLA i.e. that are proximate to a GLA frequency (by computing an adjustment to be made to an amplitude of the frequency component and then causing the adjustment to be applied), before converting the frequency components back to a time domain for output into further stages of the digital signal processing method of a receiver.

Using a filter to process a signal and reduce an impact of GLA on the signal 1004 therefore in some cases comprising using a CDC filter, which may be repurposed and made more simple, to reduce an impact of GLA on the signal 1006.

A MI/MO filter can also be used for GLA compensation, because it can be used to convert the digital signal 1002 into a frequency domain and amplify frequency components affected by GLA, similarly to the CDC filter as described. Block 1004 therefore in some cases comprises, as illustrated by block 1005, using a MI/MO filter to process the signal 1002 in a frequency domain to reduce an impact of GLA on the signal 1002. The processed signal in the frequency domain is then reconverted back into a time domain. The MI/MO filter can alternatively be implemented in the time domain in the form of a tap filter.

In some cases, a MI/MO filter is trained, meaning that the MI/MO filter is trained using training data to adjust parameters of the MI/MO filter in order that a loss between a ground truth filtered signal and a resulting filtered signal produced by the MI/MO filter in response to receiving a signal 1002, is minimized. A MI/MO is in some cases adaptive, and in further cases comprises a training stage. Especially, a MI/MO filter used to compensate for polarization mode dispersion (PMD) in a signal 1002 is adaptive, and is typically located in a receiver configured to operate on a signal received via a solid-core fiber.

An adaptive MI/MO filter such as a filter configured to compensate for PMD is adjusted, by modifying parameters of the training of the adaptive MI/MO filter, to work with gas line absorption (which are fixed in frequency and substantially static over an active lifetime of a HCF) such that the adaptive MI/MO filter is trained to reduce an impact of GLA on a signal 1002. For example, by lengthening a training sequence and a duration of optimization during training, starting with initial parameters for filters (e.g. tap filters) that are closer to parameters defining a filter capable of compensating for GLA at fixed GLA frequencies, and by adjusting the performance metric used for training to represent a loss between a ground truth signal with an impact of GLA reduced and the signal that is output by the adaptive MI/MO filter, the adaptive MI/MO filter is enabled to be trained such that it is usable to reduce an impact of GLA on a signal 1002 that is received.

In addition or alternatively to using a MI/MO filter to adjust an amplitude of a signal component, the MI/MO filter may be used to adjust a phase of the signal (i.e. of a signal component of the signal) so as to reduce a magnitude of phase distortion of the signal caused by gas line absorption. Phase distortion is caused by GLA because a phase shift of the signal caused by a gas within a HCF in response to the signal impinging upon the gas is not directly proportional to the frequency of the signal. As such, different frequency components (being distinct signal components or different modulation states of a same signal component) of a signal undergo different phase shifts during transmission via a HCF. This can result in errors being introduced at a receiver in the demodulated data from the signal.

The MI/MO filter can be used to reduce, with the aim of removing, phase distortion of the signal by GLA, by computing a phase shift response of the gas associated with the GLA and applying an inverse response to the signal.

Method 1000 further comprises performing additional filtering (using an additional filter) of the digital signal 1002, in some cases being additional filtering of the digital signal output by the MI/MO filter of block 1005 or the CDC filter of block 1006. The additional filtering comprises determining an indication of a number of errors (e.g. a bit error rate) of a signal and amplifying portions of a spectrum of the signal to minimize the number of errors indicated by the indication of the number of errors 1008.

For example, an additional filter may be introduced into the signal processing method of a receiver which operates in the digital domain. The additional filter may be adaptive, and may receive a digital signal and monitor the digital signal by continuously receiving a computed bit error rate of the digital signal, for example by using a machine learning model that is trained to receive inputs defining properties of a digital signal and output a computed bit error rate. The additional filter may, in response to a determined bit error rate, adjust a portion of the spectrum of the signal, for example a frequency component of the signal, to cause a bit error rate of the signal to be reduced, by testing adjustments in an iterative method.

For example, the additional filter may be adaptive by performing the following exemplary operations:
1) In response to a bit error rate of 0.1, the additional filter adjusts a first frequency component of the signal by amplifying the first frequency component by a factor of 1.2x.
2) In response to a subsequent bit error rate of 0.2, the additional filter stops amplifying the first frequency component, and amplifies a second frequency component by a factor of 1.4x.
3) In response to a subsequent bit error rate of 0.05, the additional filter maintains amplification of the second frequency component and amplifies a third frequency component by a factor of 1.1x.
4) In response to a subsequent bit error rate of 0.02, the additional filter maintains amplification of the second and third frequency components.

In this way, a bit error rate of the signal is reduced. Because GLA impacts the signal by reducing an amplitude of a portion of the signal proximate to a GLA frequency, and therefore reduces a signal-to-noise ratio of the portion of the signal, GLA increases a bit error rate of the signal. The additional filter therefore indirectly compensates for the impact of GLA, by amplifying portions of the signal such that a bit error rate of the signal is reduced.

Method 1000 therefore operates to adjust an amplitude of a signal in order to reduce an impact of GLA on the signal. As mentioned above, in various examples, block 1004 is performed whilst block 1008 is not performed, and in other examples, block 1008 is performed whilst block 1004 is not performed. Moreover, method 1000 is in various examples performed in addition to or alternatively to the use of an optimization model to compute an adjustment to a property of the signal, which is configured to be applied by a receiver or a transmitter, as described herein.

The adjustment to the signal as described herein is computed in various examples by an apparatus such as apparatus 902 of FIG. 9A, which comprises a computing-based device.

FIG. 11 illustrates various components of an exemplary computing-based device 1100 which are implemented as any form of a computing and/or electronic device, and in which embodiments of a method for mitigating gas line absorption of, and/or the impact of IMI and/or PMD on, a signal transmitted via a HCF, as described herein (e.g. any or all of the method of FIGs. 8A, 8B, 8C, 8D, and 10) are implemented in some examples. In some examples, the computing-based device 1100 is a general-purpose computer that is activated or reconfigured by a computer program stored in the computer. In other examples the computing-based device is specially constructed for the intended purpose.

Computing-based device 1100 comprises one or more processors 1102 which are microprocessors, controllers or any other suitable type of processors for processing computer executable instructions to control the operation of the device in order to perform the method for mitigating gas line absorption of a signal transmitted via a HCF described herein. The processors 1102 may include at least one general-purpose processing device such as a central processing unit, microprocessor, complex instruction set computing (CISC) microprocessor, reduced instruction set computing (RISC) microprocessor, or other general-purpose processing device. In some examples, for example where a system on a chip architecture is used, the processors 1102 include one or more special-purpose processing device such as a fixed function block (also referred to as an accelerator) which implements a part of the method for mitigating gas line absorption of a signal transmitted via a HCF described herein in hardware (rather than software or firmware). The special-purpose processing device may be configured to execute instructions for performing the operations and methods described herein. Platform software comprising an operating system or any other suitable platform software is provided at the computing-based device to enable application software such as gas line absorption mitigation software (which is configured to perform the methods of mitigating gas line absorption of a signal transmitted via a HCF as described herein) to be executed on the device.

Alternatively, or in addition, the functionality described herein is performed, at least in part, by one or more hardware logic components. For example, and without limitation, illustrative types of hardware logic components that are optionally used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Graphics Processing Units (GPUs).

Gas line absorption mitigation software 1106 comprises computer executable instructions that, when executed, cause the computer-based device 1100 to perform the methods for mitigating gas line absorption of a signal transmitted via a HCF, described herein (e.g. any or all of the methods of FIGs. 8A, 8B, 8C, 8D, and 10). The gas line absorption mitigation software 1106 may comprise the optimisation model 1108 that is used to compute the adjustment to the property of the signal to reduce the impact of gas line absorption of the signal, as described herein. Alternatively, the gas line absorption mitigation software 1106 is in various examples IMI and/or PMD mitigation software, and carries out, for example, the methods of FIGs. 8C and 8D independently of mitigating GLA.

The computer executable instructions are provided using any computer-readable media that is accessible by computing based device 1100. Computer-readable media includes, for example, computer storage media such as memory 1104 and communications media. Computer storage media, such as memory 1104, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 1104) is shown within the computing-based device 1100 it will be appreciated that the storage is, in some examples, distributed or located remotely and accessed via a network or other communication link (e.g. using communication interface 1114).

Optionally, memory 1104 comprises an adjustment store 1110 which is arranged to store adjustments computed by the gas line absorption mitigation software 1106. The memory 1104 may also comprise a receiver feedback store 1116 which is arranged to store feedback from a receiver that is used by the gas line absorption mitigation software 1106 to compute the adjustment to a property of a signal to reduce the impact of GLA on the signal.

The computing-based device 1100 also comprises an input/output interface 1112 arranged to output display information in some examples to a display device which may be separate from or integral to the computing-based device. The display information may provide a graphical user interface.

The input/output interface 1112 is also arranged to receive and process input from one or more devices, such as a user input device (e.g. a mouse, keyboard, camera, microphone or other sensor), a transmitter, and/or a receiver.

For example, where the computing-based device 1100 is part of the transmitter (e.g. part of transmitter 112 shown in FIG. 1B), the input/output interface 1112 may output the adjustments determined by the gas line absorption mitigation software (or IMI and/or PMD mitigation software) to the control circuitry in the transmitter that controls the operation of the transmitter. Where the computing-based device 1100 is separate from the transmitter, it may output the adjustments to the transmitter via the input/output interface 1112 or alternatively via the communication interface 1114. In such an implementation, feedback from a receiver may be received by the computing-based device 1100 via the input/output interface 1112 or via the communication interface 1114. As described above, feedback may be stored in the receiver feedback store 1116.

Alternatively or in addition to the other examples described herein, examples include any combination of the following:
Clause A. An apparatus comprising: a processor; and a memory storing instructions that, when executed by the processor, perform a method for mitigating gas line absorption of a signal transmitted via a hollow core fiber by a transmitter, the method comprising: computing an adjustment to be made to a property of the signal, the adjustment being an adjustment to change one or more of a frequency, an amplitude, and a modulation format of the signal to reduce an impact of gas line absorption on the signal; and configuring one or more of: the transmitter to cause the adjustment to be applied to the signal during transmission of the signal, via the hollow core fiber, by the transmitter; and a receiver configured to receive the signal transmitted via the hollow core fiber, to cause the adjustment to be applied to the signal in response to the receiver receiving the signal.
Clause B. The apparatus of clause A, wherein the adjustment comprises an adjustment to one or more of: a frequency of a first channel of the signal proximate to a first gas line absorption frequency, so as to reduce an overlap of the first channel with the first gas line absorption frequency; a power allocation of a second channel of the signal proximate to a second gas line absorption frequency, so as to amplify the second channel; a frequency of a first pilot tone comprised in the signal and proximate to a fourth gas line absorption frequency so as to move the frequency of the first pilot tone further from the fourth gas line absorption frequency; a frequency of the signal, in response to the signal comprising a second pilot tone, so as to add a duplicate pilot tone to the signal, the duplicate pilot tone having same properties as the second pilot tone but having a frequency that is different to the second pilot tone; an amplitude of a narrow-band region of the signal proximate to a fifth gas line absorption frequency so as to amplify the narrow-band region of the signal, and wherein the transmitter is configured to cause the adjustment to be applied to the signal during transmission of the signal, via the hollow core fiber, by the transmitter.
Clause C. The apparatus of clause B, wherein the frequency of the first channel is one or more of: a central frequency of the first channel, a frequency width of the first channel.
Clause D. The apparatus of clause B or clause C, wherein the duplicate pilot tone and the second pilot tone are separated by a frequency that is different to a frequency separation between two gas line absorption frequencies within the hollow core fiber.
Clause E. The apparatus of clause B or clause C, wherein the narrow-band region of the signal is a third pilot tone comprised in the signal.
Clause F. The apparatus of any of clauses A to E, wherein the adjustment comprises one or more of: an adjustment to an amplitude of a narrow-band region of the signal proximate to a sixth gas line absorption frequency so as to amplify the narrow-band region of the signal; an adjustment to an amplitude of the signal performed using a filter of a multi-in/multi-out equalizer operating on the signal in a digital domain, so as to amplify a frequency component of the signal proximate to a seventh gas line absorption frequency; an adjustment to an amplitude and phase of the signal performed using a chromatic dispersion compensation filter operating on the signal in a digital domain, so as to amplify a frequency component of the signal proximate to a ninth gas line absorption frequency; an adjustment to a phase of the signal performed using a filter of a multi-in/multi-out equalizer operating on the signal in a digital domain, so as to reduce a magnitude of phase distortion of the signal caused by gas line absorption; an adjustment to an amplitude of the signal performed using an adaptive filter operating on the signal in a digital domain, wherein the adaptive filter is configured to amplify a portion of the signal so as to reduce a bit error rate of the signal, and wherein the receiver is configured to cause the adjustment to be applied to the signal in response to the receiver receiving the signal.
Clause G. The apparatus of any of clauses A to F, wherein the adjustment comprises an adjustment to a modulation format of a third channel of the signal with a frequency proximate to a third gas line absorption frequency so as to reduce a required signal-to-noise ratio at a receiver for data represented by the third channel to be reconstructed with a threshold accuracy, and wherein the transmitter is configured to cause the adjustment to be applied to the signal during transmission of the signal via the hollow core fiber by the transmitter.
Clause H. The apparatus of any of clauses A to G, wherein the adjustment to be made to a property of the signal is computed using an optimization model by providing as input to the optimization model: an indication of a property of gas line absorption within the hollow core fiber, and a property of the signal.
Clause I. The apparatus of clause H, wherein the method further comprises; obtaining feedback from the receiver in response to the receiver receiving a prior signal transmitted via the HCF by the transmitter; and providing the feedback as input to the optimization model, wherein the feedback comprises an indication of a number of errors associated with demodulation of the prior signal received by the receiver.
Clause J. The apparatus of clause H or clause I, wherein the indication of the property of gas line absorption within the hollow core fiber is specific to the hollow core fiber.
Clause K. The apparatus of any of clauses H to J, wherein computing the adjustment to be made to a property of the signal comprises computing a plurality of adjustments each to be made to a property of the signal, and wherein the optimization model is used to compute the adjustments such that an overall performance metric of the signal is improved.
Clause L. The apparatus of any of clauses A to K, wherein the transmitter is configured to cause the adjustment to be applied to the signal during transmission of the signal, via the hollow core fiber, by the transmitter, and wherein the method further comprises initiating transmission of the signal via the hollow core fiber by the transmitter such that the transmitter generates the signal using the adjustment to the property of the signal.
Clause M. The apparatus of any of clauses A to L, wherein the method further comprises providing an indication of the adjustment to the property of the signal to a receiver for use by the receiver to demodulate the signal.
Clause N. The apparatus of any of clauses A to M, wherein the apparatus comprises one of: the transmitter, and the receiver.
Clause O. The apparatus of any of clauses A to N, wherein the adjustment further comprises an adjustment to a property of the signal to reduce an impact of at least one of: intermodal interference and polarization mode dispersion, on the signal.
Clause P. The apparatus of clause O, wherein the adjustment to the property of the signal to reduce an impact of at least one of: intermodal interference and polarization mode dispersion, on the signal, comprises an adjustment to a bandwidth of a channel of the signal such that at least one of: an impact of intermodal interference on a signal response across the channel, and an impact of polarization mode dispersion on the channel, is negligible.
Clause Q. The apparatus of clause P, wherein the adjustment to the bandwidth of the channel is an adjustment to reduce a bandwidth of the channel.
Clause R. The apparatus of any of clauses O to Q, wherein the adjustment to a property of the signal to reduce an impact of at least one of: intermodal interference and polarization mode dispersion, on the signal, comprises an adjustment to cause the signal to comprise at least two overlapping channels.
Clause S. The apparatus of clause R, wherein the method further comprises configuring the receiver to perform interference cancellation to reduce interference between the at least two overlapping channels.
Clause T. A method for mitigating gas line absorption of a signal transmitted via a hollow core fiber by a transmitter, the method comprising: computing an adjustment to be made to a property of the signal, the adjustment being an adjustment to change one or more of a frequency, an amplitude, and a modulation format of the signal to reduce an impact of gas line absorption on the signal; and configuring one or more of: the transmitter to cause the adjustment to be applied to the signal during transmission of the signal, via the hollow core fiber, by the transmitter; and a receiver configured to receive the signal transmitted via the hollow core fiber, to cause the adjustment to be applied to the signal in response to the receiver receiving the signal.
Clause U. The method of clause T, wherein the adjustment comprises an adjustment to one or more of: a frequency of a first channel of the signal proximate to a first gas line absorption frequency, so as to reduce an overlap of the first channel with the first gas line absorption frequency; a power allocation of a second channel of the signal proximate to a second gas line absorption frequency, so as to amplify the second channel; a frequency of a first pilot tone comprised in the signal and proximate to a fourth gas line absorption frequency so as to move the frequency of the first pilot tone further from the fourth gas line absorption frequency; a frequency of the signal, in response to the signal comprising a second pilot tone, so as to add a duplicate pilot tone to the signal, the duplicate pilot tone having same properties as the second pilot tone but having a frequency that is different to the second pilot tone; an amplitude of a narrow-band region of the signal proximate to a fifth gas line absorption frequency so as to amplify the narrow-band region of the signal, and wherein the transmitter is configured to cause the adjustment to be applied to the signal during transmission of the signal via the hollow core fiber by the transmitter.
Clause V. The method of clause U, wherein the frequency of the first channel is one or more of: a central frequency of the first channel, a frequency width of the first channel.
Clause W. The method of clause U or clause V, wherein the duplicate pilot tone and the second pilot tone are separated by a frequency that is different to a frequency separation between two gas line absorption frequencies within the hollow core fiber.
Clause X. The method of clauses U to W, wherein the narrow-band region of the signal is a third pilot tone comprised in the signal.
Clause Y. A non-transitory computer-readable medium storing instructions that, when executed by a computer, direct the computer to perform the method of any of clauses T to X.
Clause Z. A method for mitigating intermodal interference and polarization mode dispersion of a signal transmitted via a hollow core fiber by a transmitter, the method comprising: computing an adjustment to be made to a property of the signal, the adjustment being an adjustment to change a frequency of a channel of the signal to reduce at least one of: an impact of intermodal interference and polarization mode dispersion, on the signal; and configuring the transmitter to cause the adjustment to be applied to the signal during transmission of the signal, via the hollow core fiber, by the transmitter.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. An apparatus comprising:
a processor; and
a memory storing instructions that, when executed by the processor, perform a method for mitigating gas line absorption of a signal transmitted via a hollow core fiber by a transmitter, the method comprising:
computing an adjustment to be made to a property of the signal, the adjustment being an adjustment to change one or more of a frequency, an amplitude, and a modulation format of the signal to reduce an impact of gas line absorption on the signal; and
configuring one or more of:
the transmitter to cause the adjustment to be applied to the signal during transmission of the signal, via the hollow core fiber, by the transmitter; and
a receiver configured to receive the signal transmitted via the hollow core fiber, to cause the adjustment to be applied to the signal in response to the receiver receiving the signal.

2. The apparatus of claim 1, wherein the adjustment further comprises an adjustment to a property of the signal to reduce an impact of at least one of: intermodal interference and polarization mode dispersion, on the signal.

3. The apparatus of claim 1, wherein the adjustment comprises an adjustment to one or more of:
a frequency of a first channel of the signal proximate to a first gas line absorption frequency, so as to reduce an overlap of the first channel with the first gas line absorption frequency;
a power allocation of a second channel of the signal proximate to a second gas line absorption frequency, so as to amplify the second channel;
a frequency of a first pilot tone comprised in the signal and proximate to a fourth gas line absorption frequency so as to move the frequency of the first pilot tone further from the fourth gas line absorption frequency;
a frequency of the signal, in response to the signal comprising a second pilot tone, so as to add a duplicate pilot tone to the signal, the duplicate pilot tone having same properties as the second pilot tone but having a frequency that is different to the second pilot tone;
an amplitude of a narrow-band region of the signal proximate to a fifth gas line absorption frequency so as to amplify the narrow-band region of the signal, and
wherein the transmitter is configured to cause the adjustment to be applied to the signal during transmission of the signal, via the hollow core fiber, by the transmitter.

4. The apparatus of claim 3, wherein the frequency of the first channel is one or more of: a central frequency of the first channel, a frequency width of the first channel.

5. The apparatus of claim 3, wherein the duplicate pilot tone and the second pilot tone are separated by a frequency that is different to a frequency separation between two gas line absorption frequencies within the hollow core fiber.

6. The apparatus of claim 3, wherein the narrow-band region of the signal is a third pilot tone comprised in the signal.

7. The apparatus of claim 1, wherein the adjustment comprises one or more of:
an adjustment to an amplitude of a narrow-band region of the signal proximate to a sixth gas line absorption frequency so as to amplify the narrow-band region of the signal;
an adjustment to an amplitude of the signal performed using a filter of a multi-in/multi-out equalizer operating on the signal in a digital domain, so as to amplify a frequency component of the signal proximate to a seventh gas line absorption frequency;
an adjustment to an amplitude and phase of the signal performed using a chromatic dispersion compensation filter operating on the signal in a digital domain, so as to amplify a frequency component of the signal proximate to a ninth gas line absorption frequency;
an adjustment to a phase of the signal performed using a filter of a multi-in/multi-out equalizer operating on the signal in a digital domain, so as to reduce a magnitude of phase distortion of the signal caused by gas line absorption;
an adjustment to an amplitude of the signal performed using an adaptive filter operating on the signal in a digital domain, wherein the adaptive filter is configured to amplify a portion of the signal so as to reduce a bit error rate of the signal,
and wherein the receiver is configured to cause the adjustment to be applied to the signal in response to the receiver receiving the signal.

8. The apparatus of claim 1, wherein the adjustment comprises an adjustment to a modulation format of a third channel of the signal with a frequency proximate to a third gas line absorption frequency so as to reduce a required signal-to-noise ratio at a receiver for data represented by the third channel to be reconstructed with a threshold accuracy, and wherein the transmitter is configured to cause the adjustment to be applied to the signal during transmission of the signal via the hollow core fiber by the transmitter.

9. The apparatus of claim 1, wherein the adjustment to be made to a property of the signal is computed using an optimization model by providing as input to the optimization model: an indication of a property of gas line absorption within the hollow core fiber, and a property of the signal.

10. The apparatus of claim 9, wherein the method further comprises;
obtaining feedback from the receiver in response to the receiver receiving a prior signal transmitted via the HCF by the transmitter; and
providing the feedback as input to the optimization model, wherein the feedback comprises an indication of a number of errors associated with demodulation of the prior signal received by the receiver.

11. The apparatus of claim 9, wherein computing the adjustment to be made to a property of the signal comprises computing a plurality of adjustments each to be made to a property of the signal, and wherein the optimization model is used to compute the adjustments such that an overall performance metric of the signal is improved.

12. The apparatus of claim 1, wherein the method further comprises providing an indication of the adjustment to the property of the signal to a receiver for use by the receiver to demodulate the signal.

13. The apparatus of claim 1, wherein the apparatus comprises one of: the transmitter, and the receiver.

14. A method for mitigating gas line absorption of a signal transmitted via a hollow core fiber by a transmitter, the method comprising:
computing an adjustment to be made to a property of the signal, the adjustment being an adjustment to change one or more of a frequency, an amplitude, and a modulation format of the signal to reduce an impact of gas line absorption on the signal; and
configuring one or more of:
the transmitter to cause the adjustment to be applied to the signal during transmission of the signal, via the hollow core fiber, by the transmitter; and
a receiver configured to receive the signal transmitted via the hollow core fiber, to cause the adjustment to be applied to the signal in response to the receiver receiving the signal.

15. A non-transitory computer-readable medium storing instructions that, when executed by a computer, direct the computer to perform the method of claim 14.
